# EUROPEAN PATENT APPLICATION

(11) **EP 1 548 481 A1**
(43) Date of publication of application: **29.06.2005**
(21) Application number: 03808886.0
(22) Date of filing: 18.09.2003
(51) Int. Cl.: G02B 21/00, G02B 21/06, G01N 37/00, C12N 15/09

(54) **COFOCAL MICROSCOPE, FLUORESCENCE MEASURING METHOD AND POLARIZED LIGHT MEASURING METOD USING COFOCAL MICROSCOPE**

(30) Priority: 30.09.2002 JP 2002287422
(71) Applicant: Japan Science and Technology Agency, Kawaguchi-shi, Saitama 332-0012 (JP)
(72) Inventor: HAYASHI, Terutake, Hitachi-shi, Ibaraki 316-0036 (JP); MAEKAWA, Katsuhiro, Hitachinaka-shi, Ibaraki 312-0001 (JP); SHIBATA, Takayuki, Hitachi-shi, Ibaraki 316-0036 (JP)
(74) Representative: Röhl, Wolf Horst, Dipl.-Phys., Dr.
(86) International application number: PCT/JP2003/011935
(87) International publication number: WO 2004/036284

(57) **Abstract**

The present invention relates to a confocal microscope and the measuring methods of fluorescence and the polarized light using the same, and said confocal microscope is provided with the inlet optical part (10, 10') to let the polarized light from an illuminating light source (11) onto an object to be observed (2) via a matrix type liquid crystal device (22) provided with a microlens array (21) on its top part, and an objective lens (23), the light detecting part (30, 30') to detect the reflected or the fluorescent light from the object to be observed, and the liquid crystal control subpart (52) to control a liquid crystal device (22), and it transmits the light passing through said microlens array (21) from each microlens to each pixel (22a) of the liquid crystal device (22), and makes a plurality of foci (24) on the object to be observed (2) by the objective lens (23), as well as controls polarization directions of the lights transmitted through each pixel of the liquid crystal device (22) using the liquid crystal control subpart (52) so that they are made mutually orthogonal.

## Description

### Technical Field

The present invention relates to a confocal microscope used for fluorescent observation or the like of biological tissues and organisms, a confocal microscope using liquid crystal device, the method of fluorescent measurement of microarray substrates by the confocal microscope using liquid crystal device, and to the method of polarized light measurement by the confocal microscope using liquid crystal device, which are of high sensitivity, excel in resolution in the horizontal and the depth directions, and are capable of dynamic observation in a wide range.

### Background Art

Heretofore, confocal microscopes have been used for the observation of fluorescent luminescence from the biological tissue samples in which biological tissues and fluorescent reagents are added in the fields of study of biological science. Since confocal microscopes have high resolution in the depth direction, they are mainly used for three dimensional observation of biological samples.

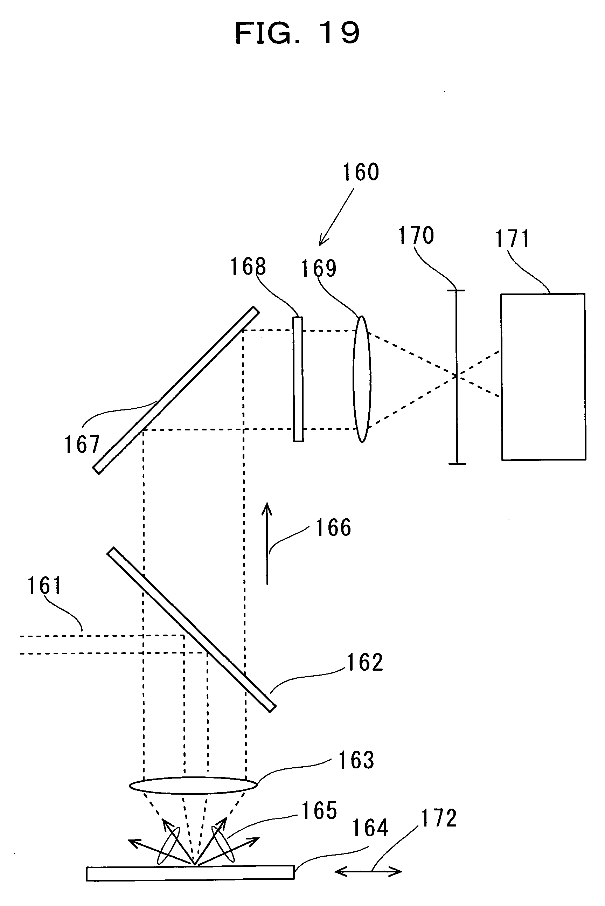

Fig. 19 shows a conventional example 1 of a confocal microscope disclosed in the Japanese Patent Application (JP H05-60980A (1993)). Laser light 161 is reflected by a beam splitter 162, and focused on a sample 164 by an objective lens 163, and the reflected light or fluorescence 166 from the sample 164 transmits a beam splitter 162, passes a mirror 167 and a lens 169, and enters a detector 171. Here, by locating a pinhole 170 before the detector 171, a clear image can be obtained by removing a light flux generated from other than a focal plane. In order to observe whole of the sample 164, the sample 164 is moved in plane on the stage on which is it set, that is, observed by scanning 172.

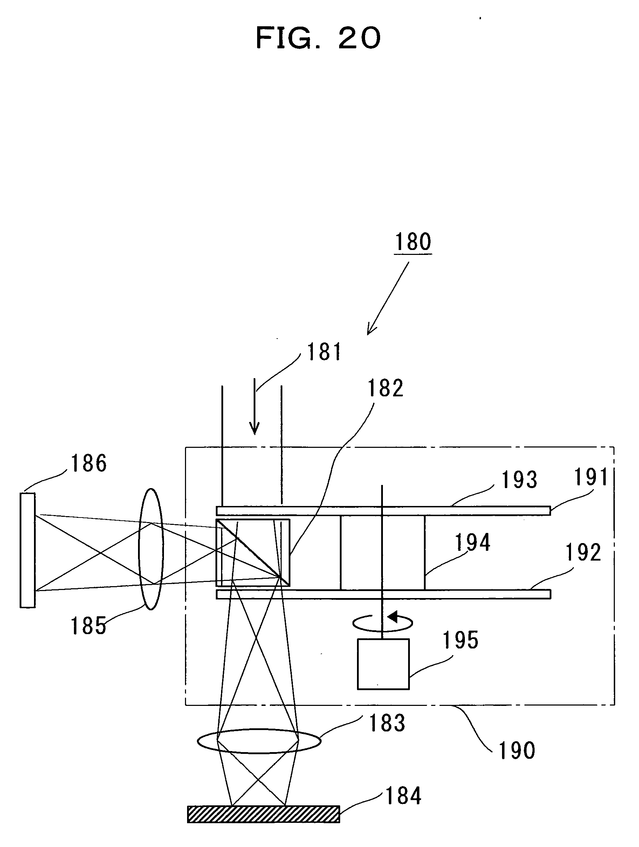

For a confocal microscope, the method to scan at high speed without moving a sample is the Nipkow disc system invented by Paul Nipkow in 1884. Fig. 20 illustrates the principle of scanning system of a multi-confocal microscope using the Nipkow disc in accordance with a conventional example 2 disclosed in the Japanese Patent Application (JP H05-60980A (1993)), "DNA Microarray substrate", written by Mark Schena, translated by Ikunoshin Kato, published by Maruzen, 2000, pp.19 - 45, and "Confocal Microscope, Laser Microscope Scanner and CCD Camera", written by Shinichiro Kawamura and three co-authors, Yokokawa Gihou, 2001, Vol. 45, No. 2, p. 112 - 114).

A multi-confocal microscope 180 lets laser light 181 into a confocal scanning apparatus 190. The confocal scanning apparatus 190 is made up with a light collecting disc 191 and a pinhole disc 192 made with two discs, a drum 194, and a beam splitter 182. The light collecting disc 191 and the pinhole disc 192 are held with the drum 194, and are rotated by a motor 195.

Here, the laser light 181 passes through a number of pinholes 193 provided to the light collecting disc 191. Thus passed lights form a plurality of foci on the object 184 by a lens 183 via a beam splitter 182, and the reflected light from the object 184 is focused on a camera 186 by a lens 185 with its path being bent 90 degrees with respect to the inlet direction via a beam splitter 182. Thereby, the efficiency of the utilized light is enhanced, and a multi-confocal microscope by a plurality of simultaneous focal detections was realized.

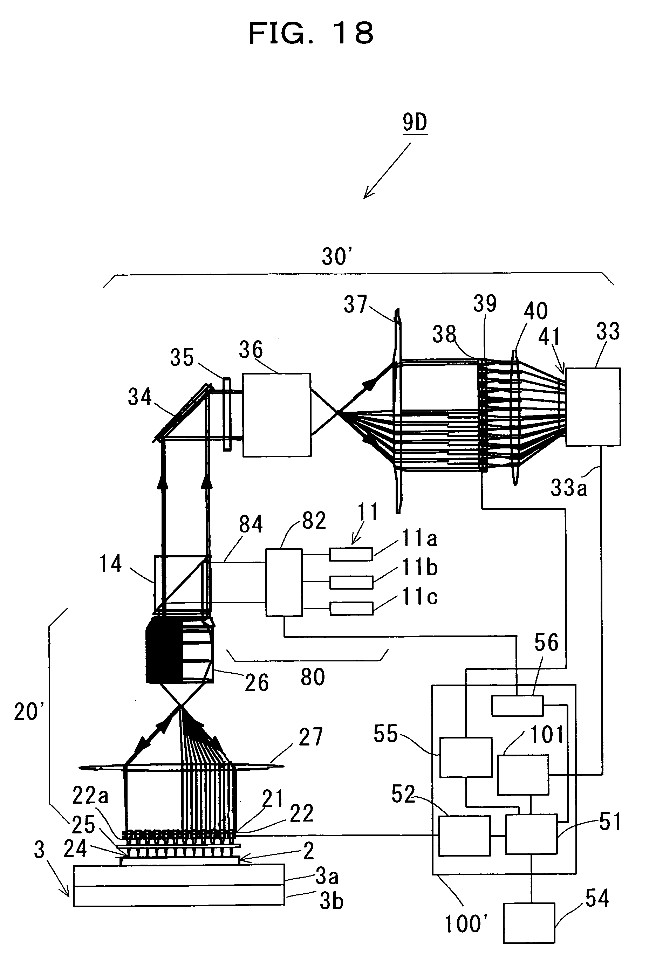

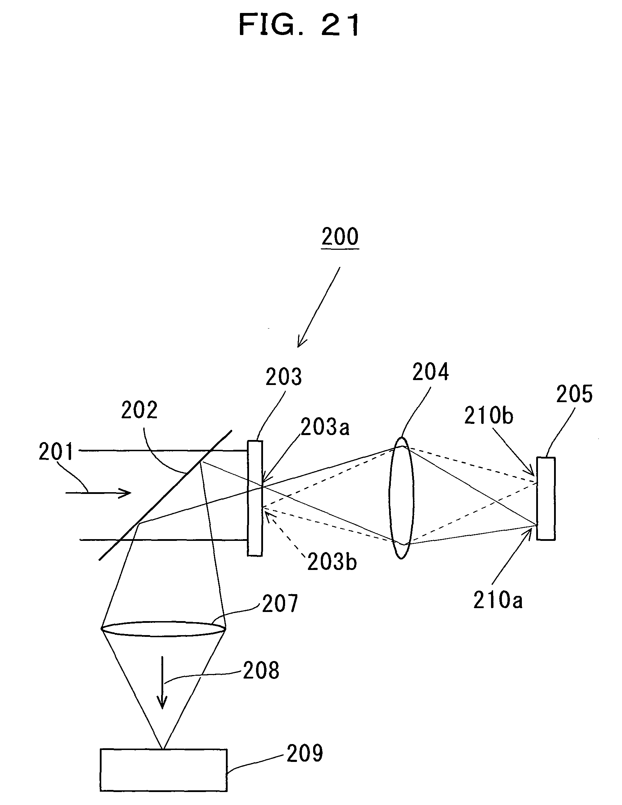

Fig. 21 illustrates the makeup of a multi-confocal microscope in accordance with a conventional example 3 disclosed in the Japanese Patent Application (JP H05-210051A (1993)). A multi-confocal microscope 200 has the similar optical system as that of the conventional example 1 of Fig. 18, but differs in that a liquid crystal cell 203 is located in the incident light path. The incident light 201 passes a beam splitter 202, and is focused on the sample 205 by an objective lens 204 via the liquid crystal cell 203. The reflected light from the sample 205 passes a lens 207 via a beam splitter 202, and the reflected light 208 is focused on a camera 209.

Here, the incident light 201 passes an open inlet part 203a that is a pixel of liquid crystal, and is focused at a point of 210a of the sample 205. Next, another pixel 203b of liquid crystal is opened, then the incident light is focused at a point of 210b of the sample 205. Thus, scanning over the sample 205 is conducted, in turn on the pixels on the liquid crystal cell plane, by so-called X-Y scanning to turn the incident light 201 on and off.

In the Japanese Patent Application (JP 2001-108684A and JP 2001-208688A), a DNA inspection apparatus is disclosed which has a multi-spot array to make the incident light source a multi-beam, and it detects the confocal of the fluorescence generated by the irradiated excitation light.

Incidentally, the confocal microscope of a sample scanning type of a conventional example 1 conducts monofocal detection, and therefore scanning is required for wide range observation, thereby real time observation of fluorescence and others is difficult.

Since the multi-confocal microscope of a conventional example 2 detects a number of points simultaneously, the incident lights on neighboring foci mutually interfere. This is called a cross-talk. The incident light intensity distribution generated by said interference causes an interference pattern as bright and dark pattern. Because of this, the illuminated light intensity distribution becomes non-uniform, which causes a problem that the horizontal resolution of the observed image is lowered. Further, as an application of the confocal microscope, the largely dispersed fluoroescent signals from DNA chips cannot be observed on a detector at one time.

The multi-confocal microscope of a conventional example 3 conducts scanning by opening and closing in turn a number of points of a liquid crystal cell, and hence such a mechanical scanning system of a conventional example 2 is not necessary. However, since X-Y scanning for the number of pixels is required for turning on and off each pixel of a liquid crystal, scanning over one image takes time, and it is difficult to detect fluorescence and the like of whole of the sample in real time.

The DNA inspection apparatus discosed in JP 2001-108684A mentioned above makes the incident lights from a multi-spot array mutually interfere to cause cross-talk, and, like the confocal microscope of a conventional example 2, the illuminated light intensity distribution becomes non-uniform, thereby the horizontal resolution of the observed image is lowered.

Further, the DNA inspection apparatus disclosed in JP 2001-208688A mentioned above forms a multi-spot array using polarizer device, and, like the confocal microscope of a conventional example 1, makes observation by scanning in-plane on the sample stage. Although the time for scanning is made shorter than the case of monofocus of the multi-confocal microscope of a conventional example 1, the scanning is necessary to observe wide range, thereby a real time observation of fluorescence or the like is difficult.

### Disclosure of the Invention

The object of the present invention is, referring to the above-mentioned problems, to offer a confocal microscope using liquid crystal device, the method of fluorescent measurement of microarray substrates by the confocal microscopy using liquid crystal device, and to a method of polarized light measurement by the confocal microscopy using liquid crystal device, which are of high sensitivity, excel in resolution in the horizontal and the depth directions, and are capable of dynamic observation in a wide range.

In order to solve the problems mentioned above, a confocal microscope using liquid crystal in accordance with the present invention is a confocal microscope comprising:an inlet optical part to let a polarized light from an illuminating light source onto an object to be observed via a beam splitter, a matrix type liquid crystal device provided with a microlens array on its top part, and an objective lens; a light detecting part including an imaging device to detect a reflected or a fluorescent light from the object to be observed via said beam splitter and lens; and a control part including a liquid crystal control subpart to control each pixel of said matrix type liquid crystal device, characterized in that it transmits the light passing through said microlens array from each microlens to each pixel of said matrix type liquid crystal device, and makes a plurality of foci on said object to be observed by said objective lens, as well as controls the polarization direction of the light transmitted through each pixel of said matrix type liquid crystal device using said liquid crystal control subpart, and said liquid crystal control subpart controls polarization directions of the lights transmitted through each pixel of the matrix type liquid crystal device so that they are made mutually orthogonal.

In the above-mentioned aspect, a polarizer is preferably located under the matrix type liquid crystal device, and the polarization of light transmitted through a polarizer is preferably controlled by each pixel of the matrix type liquid crystal. According to said aspect, the light illuminated on the object to be observed is let in by a microlens array with each pixel of a matrix type liquid crystal device as a pinhole, and makes the first plurality of foci on the object to be observed. Further, since the reflected or fluorescent light from the object to be observed forms the second plurality of foci in the light detecting part, the microscope of the present invention works as a confocal microscope. In this case, as for each pixel of a matrix type liquid crystal device, each pixel of a matrix type liquid crystal device is controlled so that the polarization directions of the light transmitted through each pixel are made mutually orthogonal. Thus, observation of the reflected or fluorescent light from the object to be observed can be made at high speed without scanning control of said object. Also, the cross-talk between multi-confoci can be prevented, so that the resolution is improved.

Also, a confocal microscope using liquid crystal in accordance with the present invention is comprising: a inlet optical part to let a polarized light from an illuminating light source onto an object to be observed via a beam splitter, a lens, and the first matrix type liquid crystal device provided with a first microlens array on its top part, a light detecting part including an imaging device to detect a reflected or a fluorescent light from an object to be observed via a beam splitter, a lens, and a second matrix type liquid crystal device provided with a second microlens array on its top part; and a control part including a first and a second liquid crystal control subpart to control a polarization direction of a light transmitted through each pixel of said first and second matrix type liquid crystal device, characterized in that it transmits the light passing through said first microlens array from each microlens to each pixel of said first matrix type liquid crystal device, and makes a plurality of foci on said object to be observed, and further, it transmits said reflected or fluorescent light passing through said second microlens array from each microlens array to each pixel of said second matrix type liquid crystal device, and makes a plurality of foci on said imaging device, as well as controls the polarization direction of the light transmitted through each pixel of said first and second matrix type liquid crystal devices using said first and second liquid crystal control subpart.

In the aspect mentioned above, the first liquid crystal control subpart of the incident light optical part may preferably control the direction of polarized light passing through each pixel of the first matrix type liquid crystal device to be made mutually orthogonal. Also preferably, the second liquid crystal control subpart of the light detecting part may control the direction of polarized light passing through each pixel of the second matrix type liquid crystal device to be made mutually orthogonal. Also, a polarizer may be located under the first matrix type liquid crystal device, and the direction of polarized light passing through said polarizer may be controlled by each pixel of the first matrix type liquid crystal.

According to said aspect, the incident light illuminated on the object to be observed is let in by the first microlens array to each pixel of the first matrix type liquid crystal device, and makes the first plurality of foci on the object to be observed. Further, since the reflected or fluorescent light from the object to be observed passes through the second microlens array of the light detecting part and each pixel of the second matrix type liquid crystal device, and forms the second plurality of foci in the light detecting part, the microscope of the present invention works as a confocal microscope. In this case, as for each pixel of the first and the second matrix type liquid crystal devices, each pixel of a matrix type liquid crystal device is controlled so that the polarization directions of the light transmitted through each pixel are made mutually orthogonal. Thus, observation of the reflected or fluorescent light from the object to be observed can be made at high speed without scan control of said object. Also, the cross-talk between multi-confoci can be prevented, so that the resolution in the horizontal and the depth directions is improved. Further, by combination of the first and the second matrix type liquid crystal devices, polarization control, choice of detected signals, and others can be dynamically realized.

Also, a confocal microscope using liquid crystal in accordance with the present invention is comprising: an inlet optical part to let an amplitude modulated polarized light from an illuminating light source onto an object to be observed via a beam splitter, a matrix type liquid crystal device provided with a microlens array on its top part, and an objective lens; a light detecting part including an imaging device to detect a reflected or an fluorescent light from the object to be observed via said beam splitter and a lens; and a control part including a liquid crystal control subpart to control each pixel of said matrix type liquid crystal device, and an amplitude modulation control part of said illuminating light source, characterized in that it transmits the light passing through said microlens array from each microlens to each pixel of said matrix type liquid crystal device, and makes a plurality of foci said object to be observed by said objective lens, as well as it controls the polarization directions of the lights transmitted through each pixel of said matrix type liquid crystal device so that they are made mutually orthogonal by using said liquid crystal control subpart, and detects amplitude modulation signals of the reflected or fluorescent light from said object to be observed by transforming them to frequency component signals.

In the aspect mentioned above, a polarizer is preferably located under a matrix type liquid crystal device, and the polarized light transmitted through said polarizer is controlled by each pixel of the matrix type liquid crystal. Also preferably, the illuminating light source is either single wavelength or multi wavelengths, and the amplitude modulation of the illuminating light source is conducted using either of a matrix type liquid crystal device, an acoustooptic modulator, or a digital mirror device. Also, the amplitude modulation per one wavelength of the illuminating light source may be applied onto each pixel by a plurality of modulated frequency.

According to said aspect, since the incident light illuminated on the object to be observed is further amplitude modulated, the reflected or fluorescent light from said object can be detected with high sensitivity by signal conversion of the reflected or fluorescent light from said object on the frequency axis. Also, in case that the illuminating light source is multi wavelengths, the reflected or fluorescent light from multi wavelengths can be measured with high sensitivity in short period.

Also, a confocal microscope using liquid crystal device in accordance with the present invention is comprising: an inlet optical part to let an amplitude modulated polarized light from an illuminating light source onto an object to be observed via a beam splitter, a lens, and a first matrix type liquid crystal device provided with a first microlens array on its top part, a light detecting part including an imaging device to detect a reflected or a fluorescent light from the object to be observed via a beam splitter, a lens, a second matrix type liquid crystal device provided with a second microlens array on its top part, and a condenser lens; and a control part including a first and a second liquid crystal control subpart to control a polarization direction of a light transmitted through each pixel of said first and second matrix type liquid crystal device, characterized in that it transmits the light passing through said first microlens array from each microlens to each pixel of said first matrix type liquid crystal device, and makes a plurality of foci on said object to be observed, and further, it transmits said reflected or fluorescent light passing through said second microlens array from each microlens array to each pixel of said second matrix type liquid crystal device, and makes a plurality of foci on said imaging device, as well as controls the polarization direction of the light transmitted through each pixel of said first and second matrix type liquid crystal devices using said first and second liquid crystal control subpart, and detects amplitude modulation signals of the reflected or fluorescent light from said object to be observed by converting them to frequency signals.

In the aspect mentioned above, the first liquid crystal control subpart of the inlet optical part preferably controls the polarization direction of the light transmitted through each pixel of the first matrix type liquid crystal device to be mutually orthogonal. Also preferably, the second liquid crystal control subpart of the light detecting part controls the polarization direction of the light transmitted through each pixel of the second matrix type liquid crystal device to be mutually orthogonal. Also, a polarizer may be located in the lower part of the first matrix type liquid crystal device, and the polarization of the light transmitted through said polarizer may be controlled by each pixel of the matrix type liquid crystal. Preferably, the illuminating light source is either mono wavelength or multi wavelengths, and the amplitude modulation of said illuminating light source is conducted using either of a matrix type liquid crystal device, an acoustooptic modulator, or a digital mirror device. Also, the amplitude modulation per one wavelength of the illuminating light source may be applied on to each pixel by a plurality of modulation frequency. Also preferably, the conversion from amplitude modulation signal to the frequency signal of the reflected or the fluorescent light from an object to be observed is processed by Fast Fourier Transform.

According to said aspect, since the incident light illuminated on to the object to be observed is further amplitude modulated, the reflected or fluorescent light from said object can be detected with high sensitivity by signal conversion of the reflected or fluorescent light from said object on the frequency axis. Also, in case that the illuminating light source is multi wavelengths, the reflected or fluorescent light from multi wavelengths can be measured with high sensitivity in short period.

The measurement method of the fluorescence from a microarray substrate by the confocal microscope using the liquid crystal of the present invention in characterized to use a microarray substrate on which a fluorescent material to be a selective marker is applied in advance, and to observe the fluorescence from said fluorescent material by the confocal microscope of the present invention. In the aspect mentioned above, the microarray substrate is the object to be observed containing a minute amount of DNA or a biological material set in array on a plane. The microarray substrate may otherwise be a DNA chip. According to said aspect, by a confocal microscope using the liquid crystal of the present invention, the fluorescence can be efficiently observed without scanning on a microarray substrate.

Also, the measurement method of the polarized light of an object to be observed by a confocal microscope using the liquid crystal of the present invention is characterized to measure the polarized light from the reflected or the fluorescent light of said object by the confocal microscope of the present invention. Preferably, the polarized light from the object to be observed is measured by rotating said polarized light by 180 degrees in the liquid crystal matrix of a confocal microscope using liquid crystal. According to said aspect by the confocal microscope using liquid crystal of the present invention, the polarized light from the reflected or fluorescent light of the object to be observed can be efficiently observed.

By the confocal microscope using liquid crystal of the present invention, objects to be observed can be simultaneously measured without scanning of said object, owing to the use of matrix type liquid crystal device. And the cross-talk can be reduced by the polarized light control of each pixel of the matrix type liquid crystal device, and the resolution in the horizontal and the depth directions can be improved. Also in case that amplitude modulation is applied with the illuminating light source as mono wavelength or multi wavelengths, the reflected or the fluorescent light can be detected with high sensitivity.

By the measurement method of a microarray substrate using a confocal microscope of the present invention, the fluorescence of mono wavelength or multi wavelengths can be efficiently observed without mechanical scanning of a microarray substrate. Also, by the measurement method of the polarized light by a confocal microscope using liquid crystal of the present invention, the polarized light from an object to be observed can be efficiently observed using mono wavelength or multi wavelengths without mechanical scanning of the object to be observed.

### Brief Description of the Drawings

The present invention will better be understood from the following detailed description and the drawings attached hereto showing certain illustrative forms of embodiment of the present invention. In this connection, it should be noted that such forms of embodiment illustrated in the accompanying drawings hereof are intended in no way to specify or limit the present invention but to facilitate an explanation and an understanding thereof, in which drawings:
Fig. 1 is a diagrammatic view illustrating the makeup of a confocal microscope using liquid crystal in accordance with the first embodiment of the present invention;
Fig. 2 is a view diagrammatically illustrating the polarized light control of each pixel of a matrix type liquid crystal device;
Fig. 3 is a view illustrating the state of the polarized light transmitted through each pixel of a matrix type liquid crystal device of Fig. 2;
Fig. 4 is a view illustrating another makeup of a confocal microscope in accordance with the first embodiment of the present invention;
Fig. 5 is a view briefly illustrating the functional effect of a polarizer provided to the inlet optical part;
Fig. 6 is a diagrammatic view illustrating the makeup of a confocal microscope in accordance with the second embodiment of the present invention;
Fig. 7 is a view illustrating another makeup of a confocal microscope in accordance with the present invention;
Fig. 8 is a diagrammatic view illustrating the makeup of a confocal microscope in accordance with the third embodiment of the present invention;
Fig. 9 is a diagrammatic view illustrating another example of the makeup of an illuminating optical part of a confocal microscope in accordance with the third embodiment of the present invention;
Fig. 10 is a diagrammatic view illustrating another makeup of a confocal microscope in accordance with the third embodiment of the present invention;
Fig. 11 is a diagrammatic view illustrating the makeup of a confocal microscope in accordance with the fourth embodiment of the present invention;
Fig. 12 is a diagrammatic view illustrating an example of the makeup of an illuminating optical part of a confocal microscope in accordance with the fourth embodiment of the present invention;
Fig. 13 is a diagrammatic view illustrating another makeup of a confocal microscope in accordance with the fourth embodiment of the present invention;
Fig. 14 is a diagrammatic view illustrating the makeup of a confocal microscope in accordance with the fifth embodiment of the present invention;
Fig. 15 is a diagrammatic view illustrating another example of the makeup of an illuminating optical part of a confocal microscope in accordance with the fifth embodiment of the present invention;
Fig. 16 is a view illustrating another makeup of a confocal microscope in accordance with the present invention;
Fig. 17 is a diagrammatic view illustrating the makeup of a confocal microscope in accordance with the sixth embodiment of the present invention
Fig. 18 is a view illustrating another makeup of a confocal microscope in accordance with the present invention;
Fig. 19 is a view illustrating the makeup of a confocal microscope of Conventional Example 1;
Fig. 20 is a view illustrating the principle of the scanning part of a multi-confocal microscope using Nipkow disc of Conventional Example 2; and
Fig. 21 is a view illustrating the makeup of a multi-confocal microscope of Conventional Example 3.

### Best Modes for Carrying out the Invention

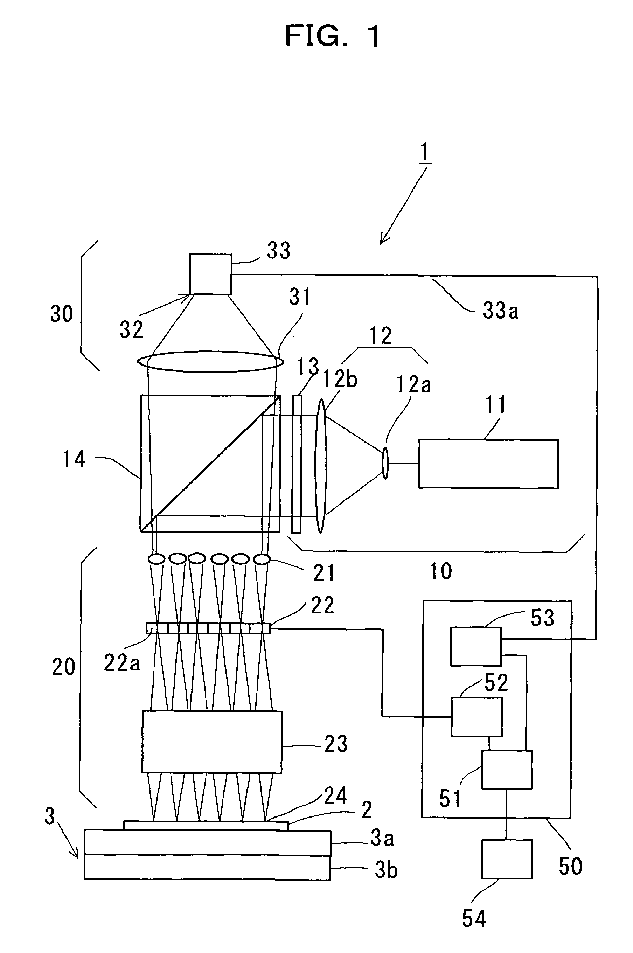

Hereinafter, the embodiments of the present invention will be described in detail with reference to the drawing figures. First of all, the first embodiment of a confocal microscope using liquid crystal device of the present invention is shown. Fig. 1 is a diagrammatic view illustrating the makeup of a confocal microscope using liquid crystal in accordance with the first embodiment of the present invention. A confocal microscope using liquid crystal device 1 comprises an illuminating optical part 10, an inlet optical part 20 which includes matrix type liquid crystal device and makes multi-foci on an object to be observed, a light detecting part 30 to detect the reflected light from the illuminated object to be observed, a control part 50 to control image data from the matrix type liquid crystal device and a light detecting part, and a stage 3 on which the object to be observed 2 is put.

The illuminating optical part 10 comprises an illuminating light source 11, a collimater 12, a first polarizer 13, and a beam splitter 14. The illuminating light source 11 is, for example, a laser source, and the outlet light is expanded to parallel light of a desired beam diameter by the collimater 12 made up with a lenses 12a and 12b, and is let into the beam splitter 14 via the polarizer 13. The wavelength of the laser source may be about 400 to 700nm. Here, if a laser source of straight polarization is used as the illuminating light source 11, the polarizer 13 may be omitted.

The inlet optical part 20 comprises, in order from above, a microlens array 21, a matrix type liquid crystal device 22, and an objective lens 23. The parallel light let into the beam splitter 14 is reflected downward, and the light having uniform intensity distribution is focused on each pixel of the matrix type liquid crystal device 22 by the microlens array 21 located under the beam splitter 14.

Said microlens array 21 is made up with a plurality of microlenses alighned array-like at the position corresponding to each pixel 22a of a matrix type liquid crystal device 22, and can let in the light efficiently to each pixel 22a of a matrix type liquid crystal device 22. Each incident light to the microlens array 21 passes through each pixel 22a of a matrix type liquid crystal device 22 as a pinhole. Each light thus passing through said each pixel 22a as a pinhole is once expanded, and makes an image as a plurality of foci 24 on the surface of the object to be observed 2 by the objective lens 23.

The object to be observed 2 is set on the stage 3. The stage 3 comprises an XYZ stage 3a movable forth and back and left and right and up and down, and a θ stage 3b. By the stage 3 moved and adjusted by the XYZ stage 3a both horizontally and vertically, the position of the object to be observed 2 can be adjusted. At the same time, by the angle adjustment in XYZ plane by the θ stage 3b, the position of the object to be observed 2 can also be adjusted.

The light detecting part to detect the reflected light from the object to be observed is explained. In the light detecting part 30, the reflected light from the object to be observed 2 proceeds reversely on the incident light path to an imaging lens 31 via the beam splitter 14, a plurality of foci 32 are formed on an imaging device 33, and the image is made of the reflected light from the object to be observed 2. As the imaging device 33, CCD type or MOS type imaging devices can be used which can detect the above-mentioned images simultaneously. Further, said imaging device 33 may be cooled by a cooling apparatus using, for example, liquid nitrogen or the Peltier device so as to reduce noise to improve S/N ratio (signal-to-noise ratio).

Here, the reflected light from the object to be observed is in case of ordinary reflected light of the same wavelength from the illuminating light source 11 and in case of fluorescence from the object to be observed excited by the illuminating light source 11. The wavelength of fluorescence is longer, in general, than that of the illuminating light source. Therefore, in case of fluorescence observation, a dichroic mirror or others may be used as a beam splitter 14 which can separate the wavelengths of the illuminating light source and fluorescence.

The control part 50 is provided with a personal computer 51, a first liquid crystal control subpart 52, and an image processing device 53. Said personal computer 51 is provided with a display device 54 to display the images of the object to be observed and others.

Further, said personal computer 51 outputs the data to control the direction of polarized light passing through each pixel of the matrix type liquid crystal device 22 to the liquid crystal control subpart 52. Said liquid crystal control subpart 52 is a drive circuit to convert the direction of rotated polarized light to a liquid crystal device drive signal by each pixel 22a of the matrix type liquid crystal device 22. Said drive circuit converts the polarized light signal of each pixel 22a of the matrix type liquid crystal device 22 from the personal computer 51 to the liquid crystal drive signal suitable to a matrix type liquid crystal device 22, that is, the voltage signal about each pixel 22a. And the liquid crystal control subpart 52 controls the direction of polarized light passing through each pixel 22a by appropriately adjusting the drive voltage applied to each pixel 22a, or by changing the drive voltage during the drive time. The image signal 33a of the imaging device 33 is output to the image processing device 53 of the control part 50, the image data is processed by the personal computer 51, and the image is output to the display device 54.

Next, a polarization control of the matrix type liquid crystal device is explained. Each pixel 22a of the matrix type liquid crystal device 22 controls the direction of polarized light passing through each pixel 22a of the matrix type liquid crystal device 22 by the first liquid crystal control subpart 51 constituting the control part 50. Thereby, the directions of inlet polarized light to each neighboring pixel are controlled to be mutually orthogonal. In this case, since all the pixels of the matrix type liquid crystal device are controlled simultaneously and for the time required for observation of the object 2, the plurality of foci 24 can be formed simultaneously on the object to be observed.

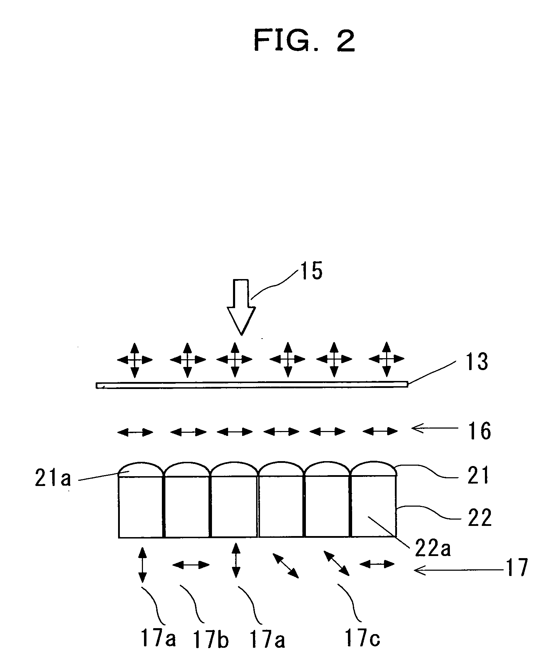

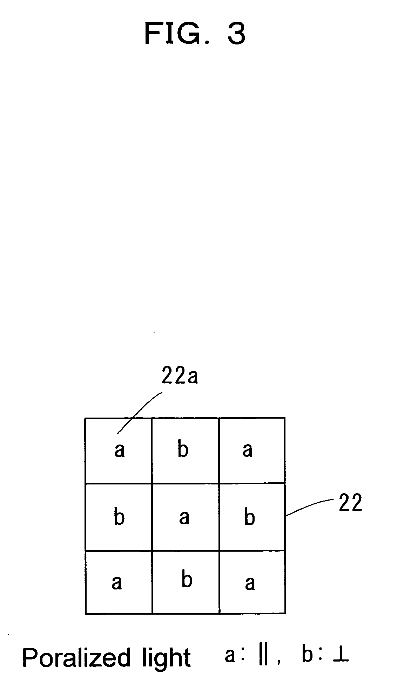

Figs. 2 and 3 are the views diagrammatically illustrating the polarized light control of each pixel of the matrix type liquid crystal device. As is shown in Fig. 2, the parallel light 15 from the collimater 12 is let into the matrix type liquid crystal device 22 via the first polarizer 13 and a microlens array 21. The first polarizer 13 mentioned above is made by known art, and, for example, by sandwitching the polarization film between two plates of glass.

The incident parallel light becomes illuminating polarized light 16 in the direction of an arrow mark as shown in Fig. 2 by the first polarizer 13, and the incident polarized light 16 is controlled by each pixel 22a of a matrix type liquid crystal device as 17a, 17b, and 17c. Here, the polarized lights 17a, 17b, and 17c of the polarized light 17 by a matrix type liquid crystal device show the vertical, the parallel, and the intermediate of vertical and parallel states to the illuminating polarized light 16, respectively.

Fig. 3 shows the polarized state of the transmitted light through each pixel 22a in a matrix type liquid crystal device 22. In the figure, a and b are the states of polarized light parallel and vertical to the incident light. Therefore, in case in the figure, the directions of polarized lights passing through each neighboring pixel 22a are mutually orthogonal. Thus, by controlling the directions of polarized lights passing through each neighboring pixel 22a of a matrix type liquid crystal device 22, the incident lights of mutually neighboring a and b have orthogonal vibration components and cause no interference.

Here, the interfering each other are the pixels between a and a, or between b and b positioned at opposing corners. Since the distance of foci at between a and a or between b and b positioned at opposing corners is expanded to 2^{1/2} compared with that between the neighboring foci a and b, the distance of neighboring foci can be made shorter to 0.71 (that is 2^{-1/2}) time compared to the case where the neighboring polarized incident light is not controlled. Therefore, the horizontal resolution can be improved by about 30% compared to the conventional case. Thereby, since the directions of polarized lights collected to the neighboring foci are mutually orthogonal by using the matrix type liquid crystal, the neighboring illuminating lights do not interfere each other, and the lowering of horizontal resolution by cross-talk can be prevented.

Next, the function of the confocal microscope using liquid crystal of the present invention is explained. The light illuminated onto an object to be observed is incident through each pixel 22a of the matrix type liquid crystal device 22 as a pinhole, and forms the plurality of the first foci 24 on said object. Further, since the reflected or fluorescent light from the object to be observed 2 forms the plurality of the second foci 32 on the light detecting part 30, the microscope of the present invention works as the confocal microscope. In this case, with respect to each pixel 22a of the matrix type liquid crystal device 22, each pixel 22a of the matrix type liquid crystal device can be controlled so that the directions of polarized light passing through each pixel 22a are made mutually orthogonal. Thereby, the cross-talks between multi-confoci are prevented, and the resolutions in horizontal and depth directions are improved. Also, the measurement of the reflected or fluorescent lights from the object to be observed 2 can be conducted at high speed without mechanical scanning of said object 2.

Strictly speaking here, since an image can not be obtained for the pitch as an interval between each pixel 22a of a matrix type liquid crystal device 22, an image may be made by moving the stage 3 by 1 pitch in the directions of X and Y.

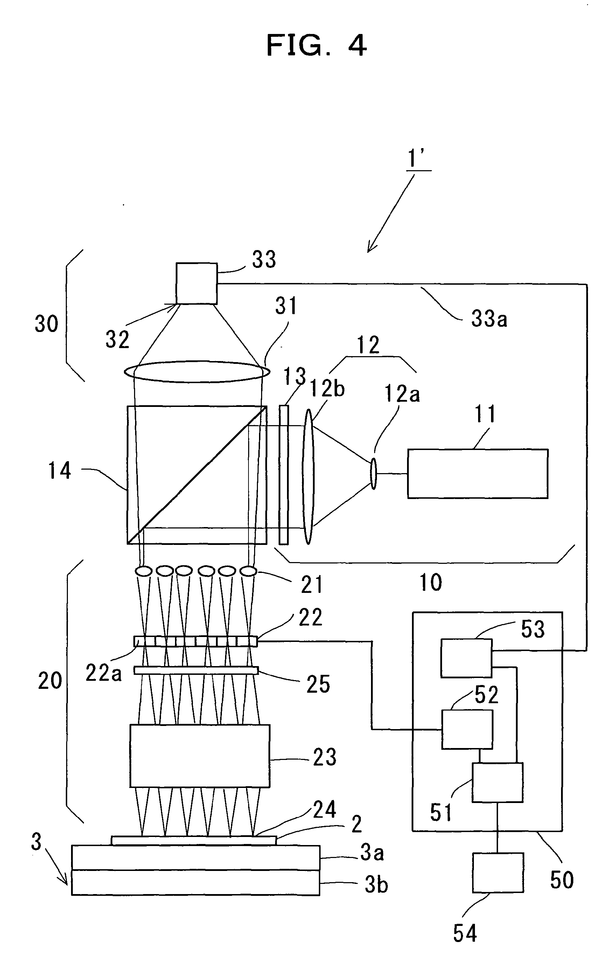

Next, a modified example of the first embodiment of the confocal microscope using liquid crystal of the present invention is shown. Fig. 4 is a view illustrating another makeup of a confocal microscope using liquid crystal in accordance with the present invention. The difference of a confocal microscope 1' shown in Fig. 4 from a confocal microscope 1 using liquid crystal shown in Fig. 1 is an inlet optical part 20. Other illuminating optical part 10, the light detecting part 30, the control part 50, and the stage 3 are all same as in Fig. 1, so that explanation is skipped. The inlet optical part 20 differs from that in Fig. 1 in that a second polarizer 25 is set in the lower part of the matrix type liquid crystal device 22.

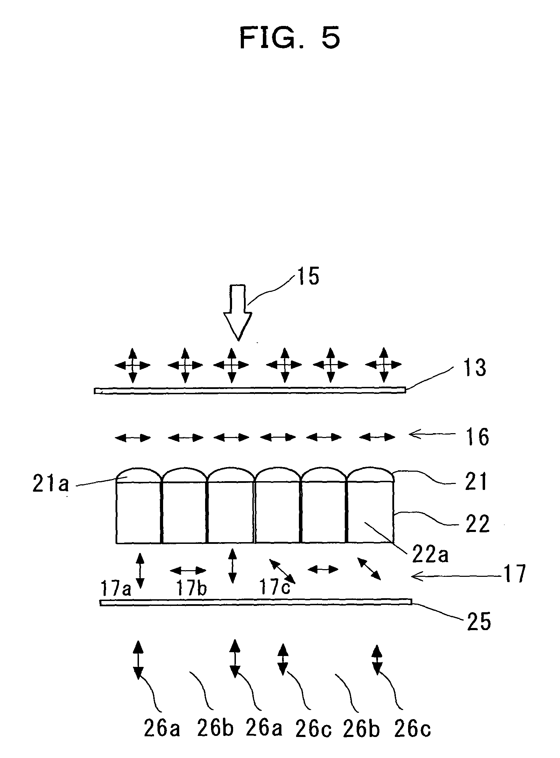

Fig. 5 is a view briefly illustrating the functional effect of a polarizer 25 provided to the inlet optical part. As shown in Fig. 5, the parallel light 15 from the collimater 12 is illuminated after passing through the first polarizer 13, the microlens array 21, and the matrix type liquid crystal device 22. Here, said first and second polarizers 13,15 are not in co-axial, but are located to be mutually orthogonal (90 degrees). When the drive voltage is not applied to the pixel 22a of the matrix type liquid crystal device, the light transmitted through the first polarizer 13 passes through a pixel 22a, and its polarization direction is twisted by 90 degrees as shown by 17. Then it is transmitted through the second polarizer 25 the transmittance axis of which is twisted by 90 degrees with respect to the first polarizer 13, and becomes transmitted light 26a.

On the other hand, if the drive voltage is applied to the pixel 22a, since the twisting state of a liquid crystal molecule in the pixel 22a changes depending upon the voltage, the direction of straight polarization transmitted through the first polarizer 13 can be rotated in said pixel 22a within the range of 0 - 90 degrees. Thereby, the intensity of the light transmitted through the second polarizer 25 can be controlled arbitrarily. Therefore, since the incident light is controlled by drive voltage of each pixel 22a of the matrix type liquid crystal device 22 so as to be transmittance 26a, untransmitted shielded light 26b, and their intermediate state (gray) 26c, the illumination intensity can be changed.

The feature of the function of a confocal microscope using liquid crystal of the present invention is explained here. In this example, the illuminated light intensity can be controlled by use of the additional second polarizer 25. Thereby, by controlling each pixel 22a of the matrix type liquid crystal device depending upon the object to be observed, the illuminated light intensity can be controlled.

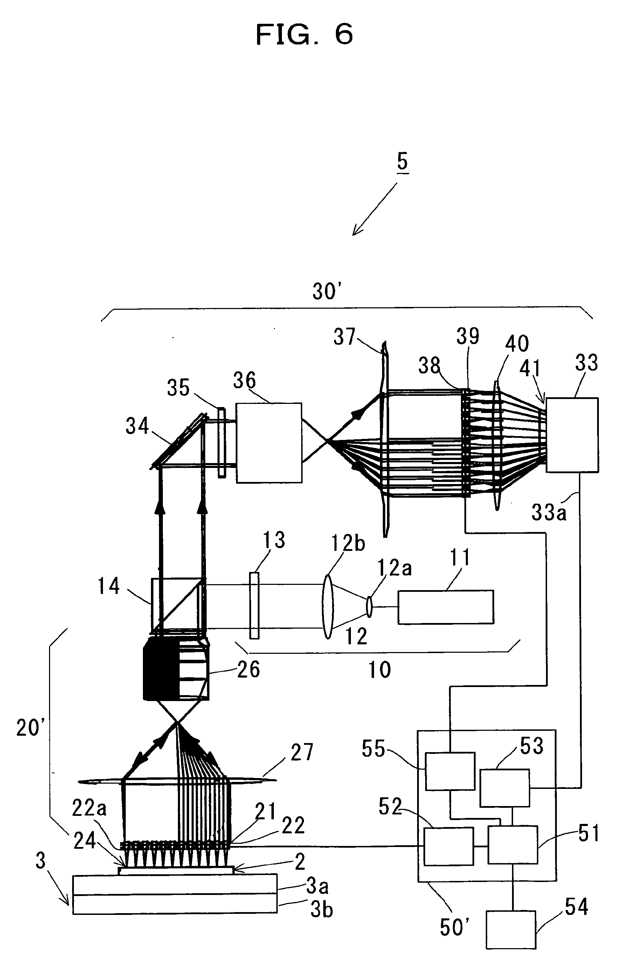

The second embodiment of a confocal microscope using liquid crystal of the present invention is shown next. Fig. 6 is a diagrammatic view illustrating the makeup of a confocal microscope using liquid crystal in accordance with the second embodiment of the present invention. In this figure, the confocal microscope 5 using liquid crystal comprises an illuminating optical part 10, an inlet optical part 20' including a matrix type liquid crystal device, and forming multi- focus on an object to be observed 2, a light detecting part 30' to detect the reflected light from said object, a control part 50' to control the image data from the matrix type liquid crystal device and the light detecting part, and a stage 3 to set said object 2. Here, the same makeup elements as in Fig. 1 are marked with the same reference numerals, and the explanation is omitted. The illuminating optical part 10 comprises, as that in Fig. 1, the illuminating light source 11, the collimater 12, and the first polarizer 13, and lets the polarized parallel light into the beam splitter 14.

The inlet optical part 20' comprises an objective lens 26, a lens 27, a microlens array 21, and a matrix type liquid crystal device 22. The polarized parallel light from the beam splitter 14 is further expanded by use of the objective lens 26 and the lens 27. This expanded light with uniform intensity distribution is illuminated over whole the first microlens array 21. The light from each microlens transmitted through the first microlens array 21 located on the surface of the first matrix type liquid crystal device 22 is transmitted through each pixel 22a of the first matrix type liquid crystal device 22, and forms a plurality of focus 24 on the object to be observed 2 located on the stage 3.

Each pixel 22a of the matrix type liquid crystal device 22 controls, as explained in Figs. 2 and 3, so that the polarization directions of neighboring pixels of each pixel 22a of the first matrix type liquid crystal device 22 become mutually orthogonal by the first liquid crystal control subpart 51 making up the control part 50'. Thereby, since the polarization directions of the incident light collected on the neighboring foci are made mutually orthogonal by using the first matrix type liquid crystal device 22, the neighboring incident lights do not interfere with each other, and lowering of the horizontal resolution by cross-talk can be prevented.

Next, the light detecting part 30' to detect the reflected or fluorescent light from the object to be observed 2 after transmitting the beam splitter 14 will be explained. The light detecting part 30' comprises a mirror 34, a filter 35, an objective lens 36, a lens 37, a second microlens array 38, a second matrix type liquid crystal device 39, a condenser lens 40, and an imaging device 33. Here, the optical part from the objective lens 36 to the second matrix type liquid crystal device 39 has the same makeup as the inlet optical part 20' from the objective lens 26 to the first matrix type liquid crystal device 22. The mirror 34 bends the light path of the reflected light from the object to be observed transmitted through the beam splitter 14 by 90 degrees, and lets it into the objective lens 36 via the filter 35 which transmits the light of specific wavelength only.

In order to observe fluorescence from an object to be observed 2, since the fluorescent wavelength is longer than that from the illuminating light source 11, a dichroic mirror may be used as a beam splitter 14 to transmit fluorescence only to the light detecting part 30'. Further for improvement of the contrast of fluorescence, an emission filter that transmits fluorescence only is preferably used as the filter 35.

Next, the objective lens 36 and the lens 37 further expand the reflected or fluorescent light from an object to be observed 2, and this light with uniform intensity distribution is illuminated onto whole the second microlens array 38. Said second microlens array 38 comprises, like the first microlens array 21, the microlenses aligned array-wise in the position corresponding to each pixel of the second matrix type liquid crystal device 39, and can let in the light efficiently to each pixel of the second matrix type liquid crystal device 39. The light from each microlens transmitted through the second microlens array 38 located on the surface of the second matrix type liquid crystal device 39 is transmitted through each pixel of a second matrix type liquid crystal device 39, and forms a plurality of foci 41 on the imaging device 33 by the condenser lens 40.

The control part 50' has the same makeup as that 50 in Fig. 1 except that a second liquid crystal control subpart 55 is provided as the control part of the second matrix type liquid crystal device 39 of the light detecting part 30'. The matrix type liquid crystal device 22 of the inlet optical part is controlled, as explained in Figs. 2 and 3, by the first liquid control part 52 which makes up a control part 50' so as to make the polarization directions of the light transmitted through neighboring pixels of each pixel 22a of the matrix type liquid crystal device 22 mutually orthogonal.

With respect to the incident reflected or fluorescent light to the light detecting part 30', when its polarization is in the same direction so that the influence of interference is generated, the polarization directions of the reflected or fluorescent light may be set mutually orthogonal upon transmittance through the second matrix type liquid crystal device 39 of the light detecting part. Thereby, the mutually neighboring reflected or fluorescent lights to the imaging device do not interfere with each other, and lowering of the horizontal resolution by cross-talk can be prevented.

The direction of polarization of the reflected light transmitted through the pixel of the second matrix type liquid crystal device 39 in the light detecting part 30' can be also controlled. In this case, since each pixel of the matrix type liquid crystal device 39 of the light detecting part 30' can be controlled to the states of transmittance, shielding, or their intermediate, the visual field can be limited.

Here, the function of a confocal microscope using liquid crystal of the present invention is explained. The light illuminating the object to be observed 2 is illuminated into each pixel 22a of the first matrix type liquid crystal device by the first microlens array 21, and forms a plurality of the first foci 24 on said object 2. Further, since the reflected or fluorescent light from the object to be observed 2 forms a plurality of the second foci 41 by using the second microlens array 38 and each pixel of the second matrix type liquid crystal device 39 in the light detecting part 30', the microscope of the present invention functions as the confocal microscope. In this case, each pixel of matrix type liquid crystal devices 22 and 39 can be controlled so that the polarization directions of the light transmitted through each pixel of matrix type liquid crystal devices 22 and 39 are set mutually orthogonal.

Therefore, unlike the conventional example 1 described above, it is not necessary to measure and synthesize images in time series by scanning a sample under the pinholes so separated that the cross-talk is not generated. Also unlike the conventional example 2, it is not necessary to measure and synthesize images in time series for each pair of the pinholes so separated that the cross-talk is not caused. Consequently, by the confocal microscope using liquid crystal device of the present invention, even if an image is formed with all pixels of a matrix type liquid crystal device as pinholes, no disturbance of images by cross-talk is generated, and all images of the object to be observed can be measured in real time. Thereby, the reflected or fluorescent light from said object can be measured at high speed without mechanical scanning control of said object 2. Also, since the cross-talk can be prevented between multi-confoci, the resolution in the horizontal and the depth directions is improved. Also, the polarization control, selection of detected signals, and others can be realized by combination of the two matrix type liquid crystal devices.

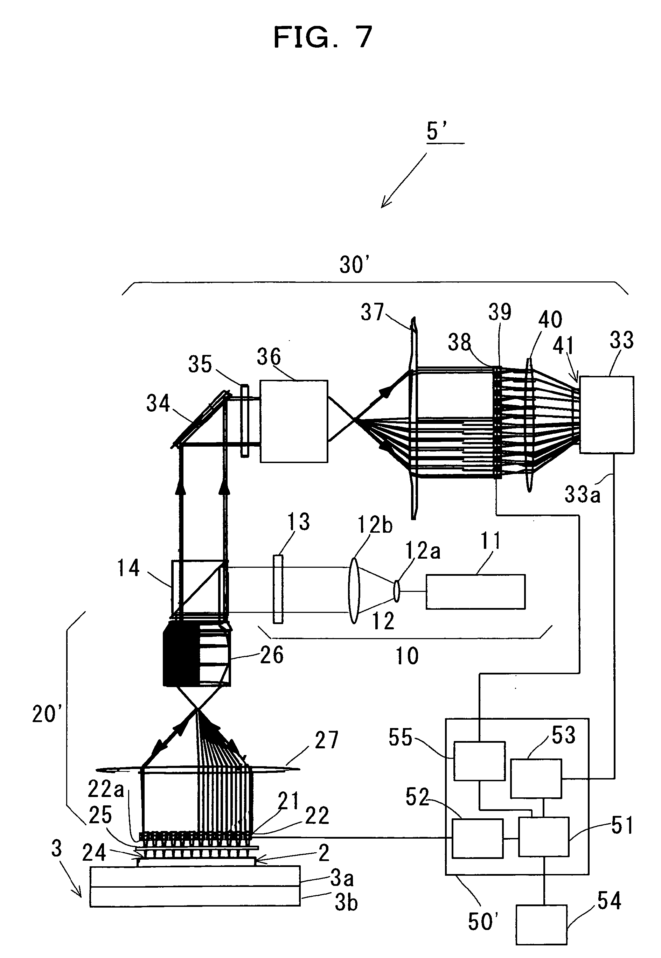

A modified example of the second embodiment of the confocal microscope using liquid crystal of the present invention is shown next. Fig. 7 is a view illustrating another makeup of a confocal microscope using liquid crystal in accordance with the present invention. The difference of the illustrated confocal microscope using liquid crystal device 5' from that of 5 as shown in Fig. 6 is an inlet optical part 20'. Since other illuminating optical part 10, the light detecting part 30', the control part 50', and the stage 3 are same makeup as in Fig.6, the explanation is omitted. In this example, the inlet optical part 20' differs from that of Fig. 6 in that the second polarizer 25 is located in the lower part of the matrix type liquid crystal device 22.

The function of said second polarizer 25 is, as explained in Figs. 4 and 5, to change the illuminating light intensity by drive voltage of pixels 22a of the first matrix type liquid crystal device. Each pixel of the first matrix type liquid crystal device 22 can be controlled so that the polarization directions of the light transmitted through each neighboring pixel 22a of the first matrix type liquid crystal device 22 of the incident optical part are set mutually orthogonal.

Here, the cross-talk between a plural of the foci 41 formed on the imaging device 33 by the reflected light from the object to be observed 2 can be prevented by polarization control of each pixel of the second matrix type liquid crystal device. Therefore, in case that the illumination of the incident light is controlled, since the image without cross-talk of the reflected light can be formed, it is not necessary to synthesize a whole image by mechanical scanning, unlike the conventional confocal microscope, and an immediate observation is possible by the display apparatus 54 of the control part 50'. Thereby, the reflected or fluorescent light from said object 2 can be observed at high speed without mechanical scanning of said object 2. Also, the cross-talk can be prevented between multi-confoci, and the resolution is improved. Further, the illuminating light control, the polarization control, the selection of detected signals, and others can be realized by combination of two matrix type liquid crystal devices and the second polarizer 25.

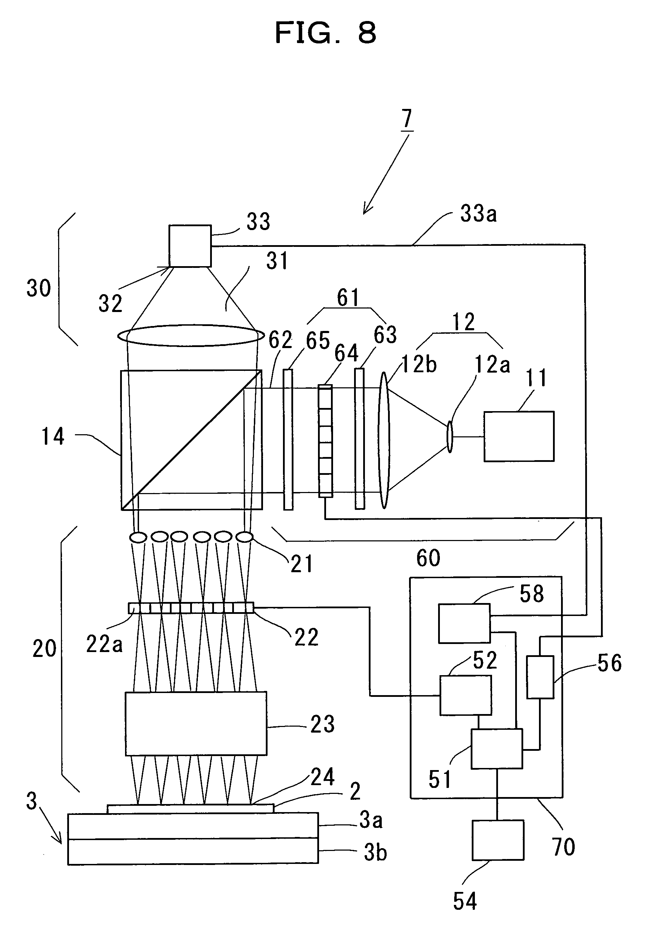

A third embodiment of a confocal microscope of the present invention is explained next. Fig. 8 is a diagrammatic view illustrating the makeup of a confocal microscope using liquid crystal device in accordance with a third embodiment. The difference of a confocal microscope 7 shown in Fig. 8 from that of 1 as shown in Fig. 1 is an illuminating optical part 60 and a control part 70. Since other inlet optical part 20, the light detecting part 30 and the stage 3 are the same makeup as shown in Fig. 1, their explanation is omitted.

An illuminating optical part 60 differs from a confocal microscope using liquid crystal 1 of Fig. 1 in that amplitude modulation can be applied to an illuminating light source 11. The illuminating optical part 60 comprises an illuminating light source 11 and an amplitude modulation part 61. The amplitude modulation part 61 generates an amplitude modulated beam light 62. For the amplitude modulation of the illuminating light source 11, an amplitude modulation device such as a matrix type liquid crystal device, an acoustooptic modulator, a digital mirror device, and others may be used.

The illuminating optical part 60 shown in Fig. 8 uses a matrix type liquid crystal device as the amplitude modulation device, and it comprises an illuminating light source 11, a collimater 12, a third polarizer 63, a matrix type liquid crystal device 64 for amplitude modulation, and a fourth polarizer 65. The illuminating light source 11 uses, for example, a laser light source, and the output light is expanded to parallel light of the desired beam diameter by the collimater 12 made up with lenses 12a and 12b. The locations of the third and the fourth polarizers 63 and 65 are such that they are mutually orthogonal, and the intensity of the expanded beam is modulated, so-called AM modulated (frequency f1) by the voltage applied on to each pixel of the matrix type liquid crystal device 64 for amplitude modulation inserted between the third and the fourth polarizers 63 and 65. The matrix type liquid crystal device 64 for amplitude modulation is controlled by a control part 70 as described below. In this case, as the amplitude modulation frequencies of neighboring pixels differ from each other, the amplitude modulation may be conducted by a plurality of different frequencies such as, for example, f1 and f2. Such modulation frequencies are preferably selected so that they are not in higher harmonic relation with each other.

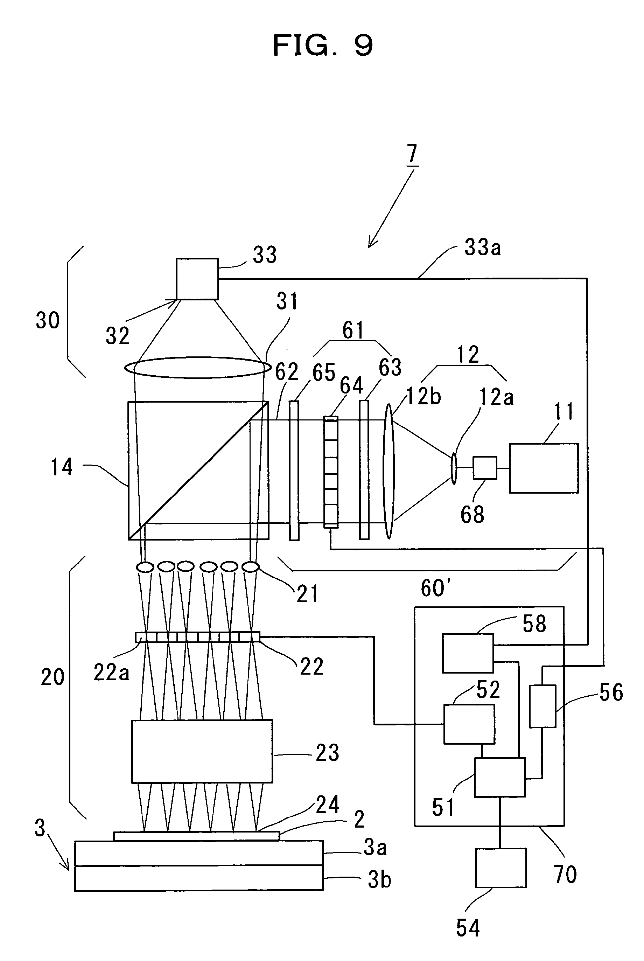

Fig. 9 is a diagrammatic view illustrating another example of the makeup of an illuminating optical part of a confocal microscope in accordance with the third embodiment of the present invention. A illuminating optical part 60' differs from the illuminating optical part 60 of Fig. 8 in that an acoustooptic modulator 68 is further provided between the illuminating light source 11 and the collimater 12. After the illuminating light source 11 is amplitude modulated (modulation frequency f_{AO}) by the acoustooptic modulator 68, and is expanded to parallel light of the desired beam diameter by the collimater 12, the light amplitude is modulated (modulation frequency f2), so-called double amplitude modulated, by the matrix type liquid crystal device 64 for amplitude modulation. The acoustooptic modulator 68 can be modulated with much higher frequency than that of using the matrix type liquid crystal device for amplitude modulation (f_{AO} > f1, f2).

The control part 70 differs from that of 50 in the confocal microscope using liquid crystal of Fig. 1 in that the amplitude modulated reflected light is detected. The control part 70 is provided with an amplitude modulation control part 56 and an image processing apparatus 58 to detect the amplitude modulated reflected light. The illuminating light source 11 is modulated by amplitude modulation devices 64 and 68 which are driven by the amplitude modulation control part 56. The amplitude modulated incident light in the illuminating optical part 60 is illuminated onto an object to be observed 2 via an inlet optical part 20, like the confocal microscope 1 shown in Fig. 1. The reflected light from said object is let into the light detecting part 30, signal-processed in the image processing apparatus 58, and its image signal is sent out to the personal computer 51.

The image processing apparatus 58 is comprised an amplifier for the detected electrical signal, an A/D converter, and others, digitalizes the time axis signal from the light detecting part, and sends it out to the personal computer 51. The personal computer 51 conducts the Fourier transform to transfer time axis signals to frequency component signals, obtains the amplitude distribution of the reflected or fluorescent light from the object to be observed 2, and displays it on the display 54. The Fourier transform can be calculated by the Fast Fourier Transform method.

The function of the confocal microscope 7 in accordance with the third embodiment is explained next. The function of the confocal microscope 7 in accordance with the third embodiment differs from that of the confocal microscope 1 in that the light illuminated onto an object to be observed 2 is amplitude modulated. In each pixel 22a of the matrix type liquid crystal device 22, the light transmitted through each pixel 22a is amplitude modulated, as well as each pixel 22a of it is controlled so the polarization directions are made mutually orthogonal. The reflected or fluorescent light from said object 2 can be detected on the frequency axis by converting the amplitude modulated signal from each pixel to a frequency signal in the light detecting part 30 and the control part 70. In this case, since the noise or others except for the cross-talk generated inside the confocal microscope 7 using liquid crystal device are different from the amplitude modulation frequency and can be easily distinguished on the frequency axis, the signal-to-noise ratio (S/N ratio) can be improved. That is, the reflected or fluorescent light from the object to be observed 2 can be detected with high sensitivity. Also in case that neighboring pixels are amplitude modulated with different frequency, the cross-talk can be further prevented. Thereby, since the cross-talk between multi-confoci can be prevented, as well as the reflected or fluorescent light intensity can be detected by the frequency of amplitude modulation, the sensitivity is made higher, and the resolutions in the horizontal and the depth directions are further improved than that of the confocal microscope 1. Also, the reflected or fluorescent light from the object to be observed 2 can be measured with high speed.

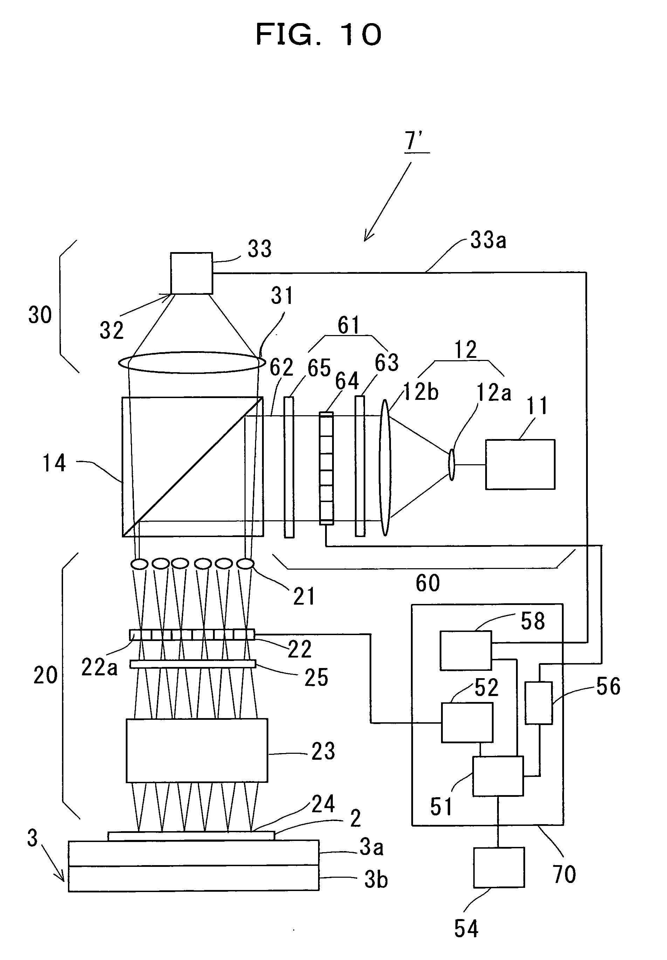

Next, a modified example of a confocal microscope of the third embodiment mentioned above will be explained. Fig. 10 is a diagrammatic view illustrating another makeup of a confocal microscope using liquid crystal in accordance with the third embodiment. The difference of a confocal microscope 7' shown in Fig. 10 from that of 7 using liquid crystal shown in Fig. 8 is an inlet optical part 20. Since other illuminating optical part 60, the light detecting part 30, the control part 70, and the stage 3 are the same makeup as in Fig.8, their explanation is omitted. The inlet optical part 20 differ from that of Fig. 8 in that a second polarizer 25 is provided in the lower part of a matrix type liquid crystal device 22. In this example, the intensity of illuminating light can be controlled, as explained in Fig. 5, by adding the second polarizer 25. Thereby, the intensity of illuminating light can be controlled by the control of each pixel 22a of a matrix type liquid crystal device depending upon the object to be observed.

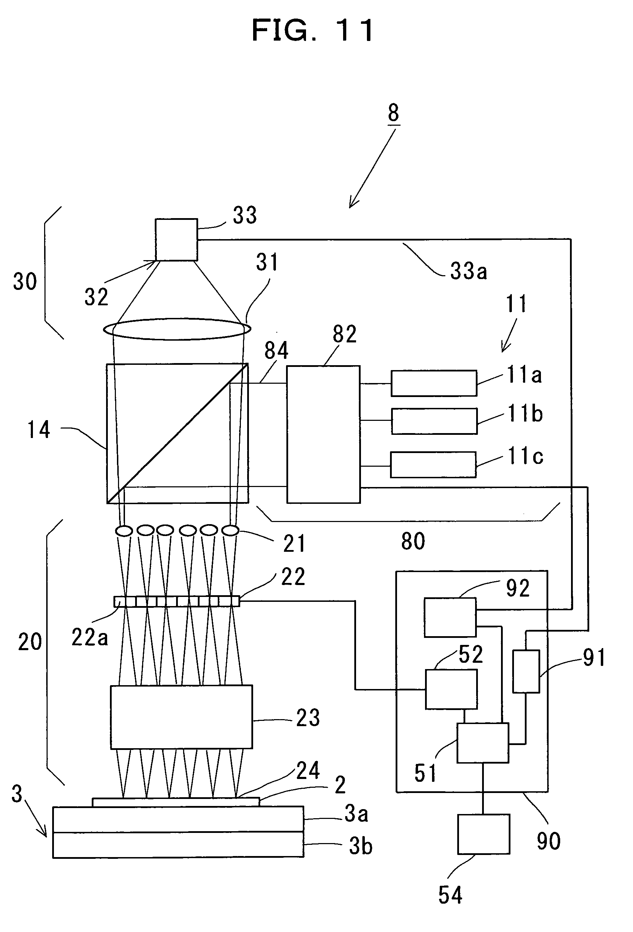

Next, the fourth embodiment of a confocal microscope of the present invention will be explained. Fig. 11 is a diagrammatic view illustrating the makeup of a confocal microscope using liquid crystal in accordance with the fourth embodiment. The difference of a confocal microscope 8 shown in Fig. 11 from that of 7 using liquid crystal shown in Fig. 8 is an illuminating optical part 80 and the control part 90. Since other inlet optical part 20, the light detecting part 30 and the stage 3 are same makeup as in Fig. 8, their explanation is omitted. In the illuminating optical part 80, the illuminating light source 11 comprises a light source having a plurality of wavelengths and an amplitude modulation part 82 to apply different amplitude modulation to a light source of each wavelength. In the figure, the illuminating light source 11 is explained as having light sources 11a, 11b, and 11c of three different wavelengths. The amplitude modulation part 82 generates the beam light 84 to amplitude modulate the illuminating light source 11. For the amplitude modulation of the illuminating light source 11, such amplitude modulation devices as a matrix type liquid crystal device, an acoustooptic modulator, a digital mirror device, and others may be used. The control part 90 is provided with an amplitude modulation control part 91 of the illuminating light source, and an image processing apparatus to detect the amplitude modulated reflected or fluorescent light from an object to be observed 2.

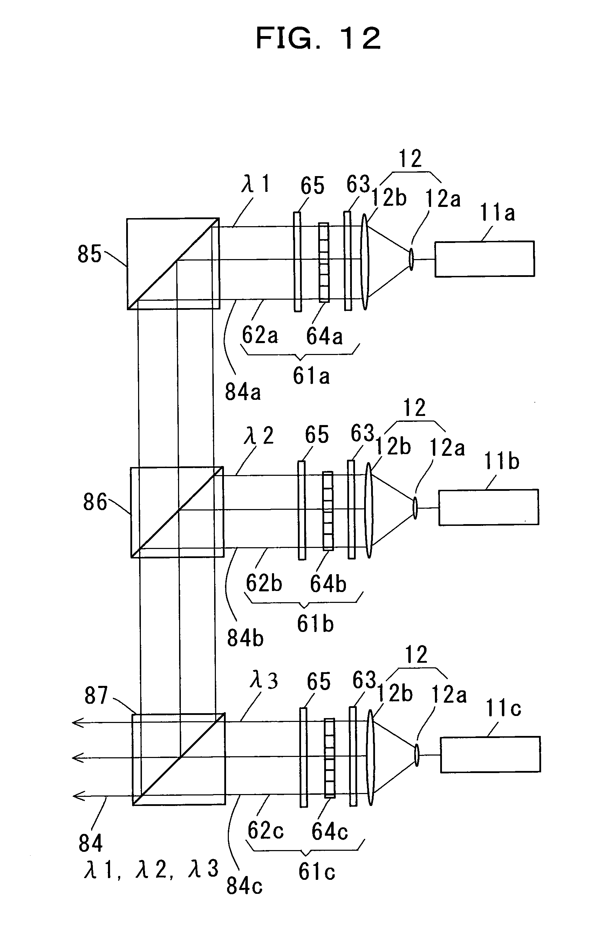

Fig. 12 is a diagrammatic view illustrating an example of the makeup of an illuminating optical part of a confocal microscope in accordance with the fourth embodiment mentioned above. In the illuminating optical part 80, each of light sources 11a, 11b, and 11c with three different wavelengths comprises collimaters 12a, 12b, and 12c, a third polarizers 63a, 63b, and 63c, matrix type liquid crystal devices for amplitude modulation 64a, 64b, and 64c, a fourth polarizers 66a, 66b, and 66c, and beam splitters 85, 86, and 87, respectively. For example, in the illuminating light source 11a, the outlet light is expanded to parallel light of the desired beam diameter by a collimater 12 comprising lenses 12a and 12b, similarly to the illuminating light source 11 explained in Fig. 9. The locations of the third and the fourth polarizers 62 and 66 are such that they are mutually orthogonal. The light amplitude of said expanded beam is modulated, so-called AM (frequency f1) by the voltage applied onto each pixel of the matrix type liquid crystal device 64a for amplitude modulation inserted between the third and the fourth polarizers 62a and 66 to become the amplitude modulated beam 84a.

The matrix type liquid crystal device 64a for amplitude modulation is controlled by the amplitude modulation control part 91 of the control part 90. Also in the illuminating light sources 11b and 11c as in the illuminating light source 11a, amplitude modulated beams 84b (frequency f2) and 84c (frequency f3) are formed by matrix type liquid crystal devices 64b and 64c for amplitude modulation. The amplitude modulation devices 64a, 64b, and 64c are driven by the amplitude modulation control part 91 and the illuminating light sources 11a, 11b, and 11c are amplitude modulated. The amplitude modulated beams 84a, 84b, and 84c in the illuminating optical part 80 are let into beam splitters 85, 86, and 87, respectively, to become the amplitude modulated beam 84 by wave multiplexing. Here, as the amplitude modulation frequencies differ for the neighboring pixels, each pixel of the amplitude modulated beams 84a, 84b, and 84c may be amplitude modulated with a plurality of different frequencies. For example, the amplitude modulation frequencies of the amplitude modulated beam 84a (wavelength λ1) may be defined as f1, f2, and f3 in the order of neighboring pixels, and, similarly the amplitude modulation frequencies of the amplitude modulated beam 84b (wavelength λ2) may be defined as f4, f5, and f6, and the amplitude modulation frequencies of the amplitude modulated beam 84c (wavelength λ3) may be defined as f7, f8, and f9. Such modulation frequencies are preferably selected so they are not in higher harmonic relation with each other.

Amplitude modulated beams 84 are illuminated onto an object to be observed 2 via an inlet optical part, like the confocal microscope 7 using liquid crystal as shown in Fig. 8. The reflected or fluorescent light from said object is let into the light detecting part 30, signal-processed in the image processing apparatus 92, and its image signal is sent out to the personal computer 51. The image processing apparatus 92 is comprising an amplifier for the detected electrical signals, an A/D converter, and others, digitalizes the time axis signal from the light detecting part, and sends it out to the personal computer 51. The personal computer 51 conducts Fourier transform to convert time axis signals to frequency component signals, obtains the intensity distribution of the reflected light, and displays it on the display 54. The Fourier transform can be calculated by the Fast Fourier Transform method to shorten the processing time.

Next, a function of the confocal microscope 8 of the fourth embodiment mentioned above will be explained. The function of said confocal microscope 8 differ from that of the confocal microscope 7 in that a plurality of lights illuminated onto an object to be observed 2 are amplitude modulated. In each pixel 22a of the matrix type liquid crystal device 22, the light transmitted through each pixel 22a is amplitude modulated, as well as each pixel 22a of it is controlled so the polarization directions are made mutually orthogonal. The reflected or fluorescent lights of a plurality of wavelengths from said object 2 can detect the amplitude modulated signal of each wavelength from each pixel on the frequency axis in the light detecting part 30 and the control part 90. In this case, since the noise or others except for the cross-talk generated inside the confocal microscope 7 using liquid crystal device are different from the amplitude modulation frequency and can be easily distinguished on the frequency axis, the signal-to-noise ratio (S/N ratio) can be improved. That is, the reflected or fluorescent light from the object to be observed 2 can be detected with high sensitivity. Also in case that neighboring pixels are amplitude modulated with different frequency, the cross-talk can be further prevented. Thereby, since the cross-talk between multi-confoci can be prevented, as well as the reflected or fluorescent light intensity can be detected by the frequency of amplitude modulation. The sensitivity is made higher for multi wavelengths, and the resolutions in the horizontal and the depth directions from multi wavelengths are improved as the confocal microscope 7 could not attain. Also, the reflected or fluorescent light from the object to be observed 2 can be measured with high speed.

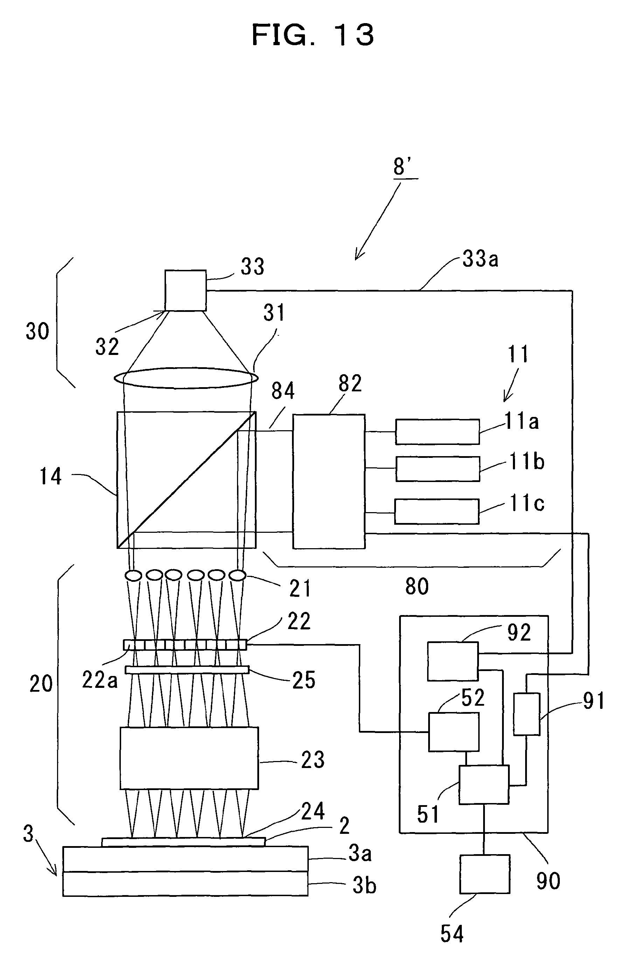

A modified example of the fourth embodiment of a confocal microscope is shown next. Fig. 13 is a diagrammatic view illustrating another makeup of a confocal microscope using liquid crystal in accordance with the fourth embodiment. The difference of a confocal microscope 8' shown in Fig. 13 from that of 8 using liquid crystal shown in Fig. 11 is an inlet optical part 20. Since other illuminating optical part 80, the light detecting part 30, the control part 90, and the stage 3 are the same makeup as in Fig. 11, their explanation is omitted. The inlet optical part 20 differs from that of Fig. 11 in that a second polarizer 25 is provided to the lower part of a matrix type liquid crystal device 22. In this modified example, the illuminating light intensity can be controlled, as explained in Fig. 5, by adding the second polarizer 25. Thereby, the illuminating light intensity can be controlled by the control of each 22a of a matrix type liquid crystal device depending upon the object to be observed.

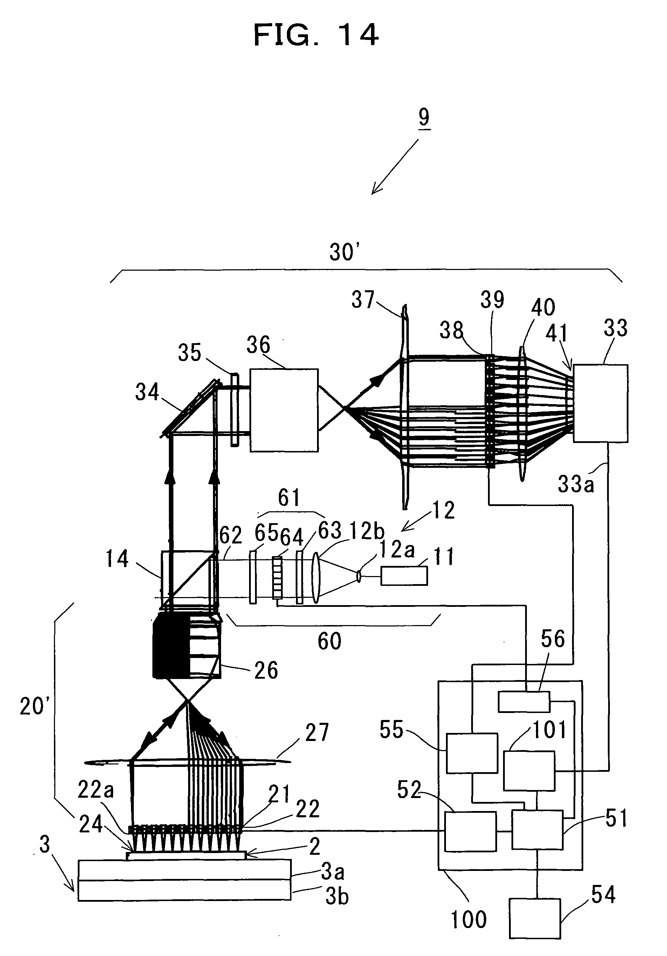

The fifth embodiment of a confocal microscope of the present invention is explained next. Fig. 14 is a diagrammatic view illustrating the makeup of a confocal microscope using liquid crystal in accordance with the fifth embodiment. The difference of a confocal microscope 9 shown in Fig. 14 from that of 5 using liquid crystal shown in Fig. 6 is an illuminating optical part 60 and a control part 100. Since other inlet optical part 20', the light detecting part 30' and the stage 3 are same makeup as in Fig. 6, their explanation is omitted. The illuminating optical part 60 is same as that 60 shown in Fig. 8 comprising a light source 11 and an amplitude modulation part 62, and generates the beam light 62 from the illuminating light source 11 which is amplitude modulated by a matrix type liquid crystal device 64 for amplitude modulation. The matrix type liquid crystal device 64 for amplitude modulation is controlled by the control part 100 described below. In this case, the amplitude modulation by a plurality of different frequencies is preferable so that the amplitude modulation frequencies of neighboring pixels differ.

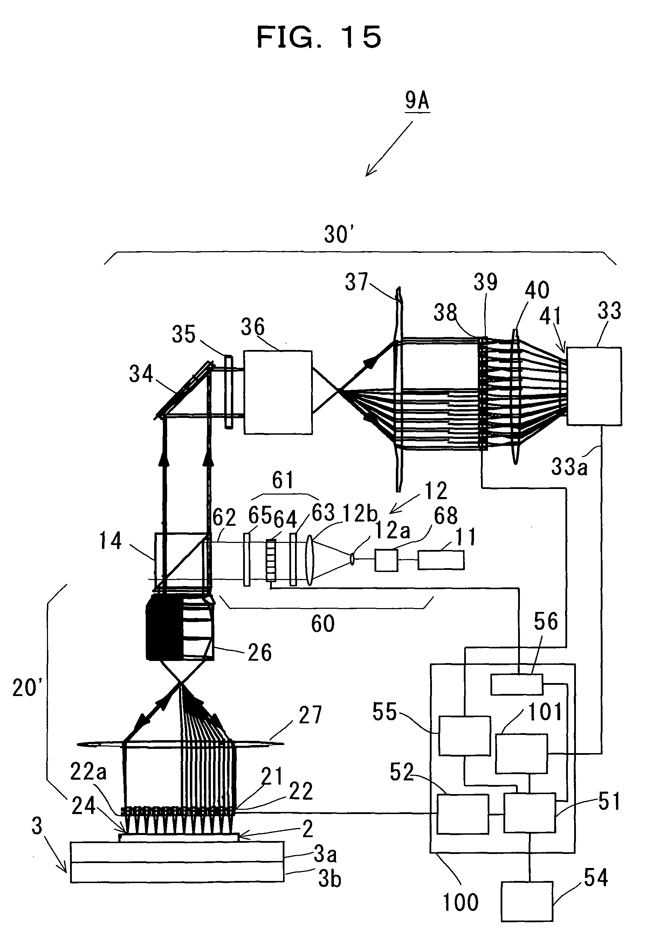

Fig. 15 is a diagrammatic view illustrating another example of the makeup of an illuminating optical part of a confocal microscope in accordance with the fifth embodiment mentioned above. In said confocal microscope 9A, an illuminating optical part 60 differs from that of 60 as shown in Fig. 14 in that an acoustooptic modulator 68 is further provided between the illuminating light source 11 and a collimater 12. After the illuminating light source 11 is amplitude modulated by the acoustooptic modulator 68, and the light is expanded to parallel light of desired beam diameter by the collimater 12, the light amplitude is modulated by the matrix type liquid crystal device 64 for amplitude modulation, that is, so-called double amplitude modulated. It can be modulated with more high frequency with use of the acoustooptic modulator 68 than that of the matrix type liquid crystal device for amplitude modulation.

The control part 100 differs from that of 50' as shown in Fig. 6 in that it is provided with an amplitude modulation control part 56 and an image processing apparatus 101 to detect the amplitude modulated reflected light. The amplitude modulation control part 56 drives an amplitude modulation device 64, and amplitude modulates the illuminating light source 11. The incident light which is amplitude modulated by the illuminating optical part 60 is illuminated onto an object to be observed 2 via the inlet optical part 20', as in case of the confocal microscope 5 shown in Fig. 6. The reflected light from said object 2 is let into the light detecting part 30', signal processed in the image processing apparatus 101, and its image signal is sent out to the personal computer 51.

The image processing apparatus 101 is comprising an amplifier for the detected electrical signals, an A/D converter, and others, digitalizes the time axis signal from the light detecting part, and sends it out to the personal computer 51. The personal computer 51 conducts Fourier transform to transfer time axis signals to frequency component signals, obtains the amplitude distribution of the reflected or fluorescent light, and displays it on the display 54. The Fourier transform can be calculated by the Fast Fourier Transform method to shorten the processing time.

An operation of the confocal microscope in accordance with the fifth embodiment is explained here. In the confocal microscope 9 of the fifth embodiment mentioned above, each pixel of matrix type liquid crystal devices 22 and 39 is controlled so that the polarization directions transmitted through each pixel of matrix type liquid crystal devices 22 and 39 are made mutually orthogonal, as explained in the operation of a confocal microscope 5 in accordance with the second embodiment.

According to the fifth embodiment, the reflected or fluorescent light from the object to be observed 2 can be detected by using the amplitude modulated signals of each pixel on the frequency axis in the light detecting part 30 and the control part 100. In this case, since the noise or others except for the cross-talk generated inside the confocal microscope 7 using liquid crystal device are different from the amplitude modulation frequency and can be easily distinguished on the frequency axis, the signal-to-noise ratio (S/N ratio) can be improved. That is, the reflected or fluorescent light from the object to be observed 2 can be detected with high sensitivity. Also when neighboring pixels are amplitude modulated with different frequency, the cross-talk can be further prevented.

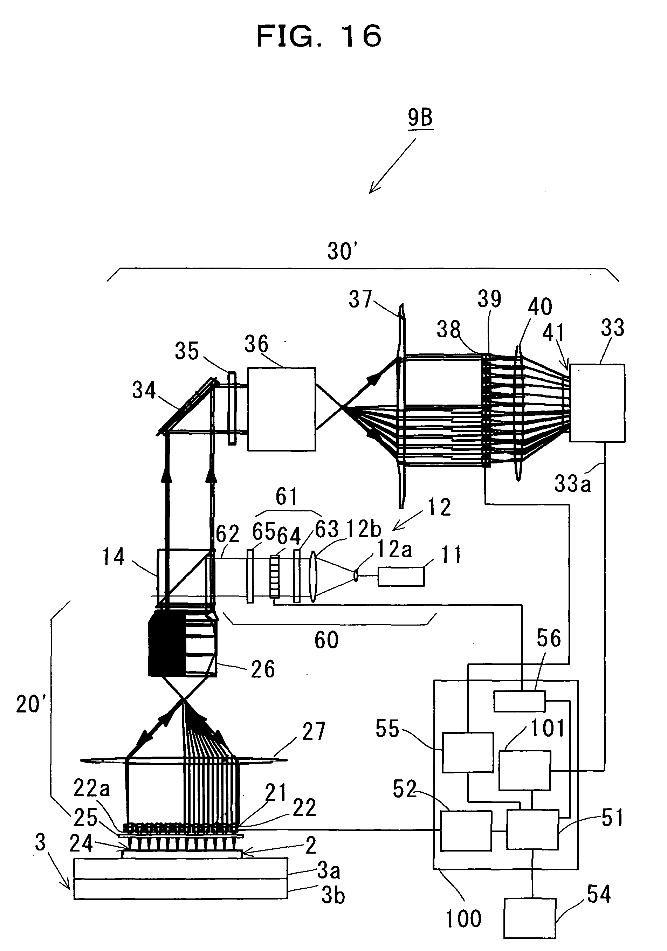

Next, a modified example of the fifth embodiment of a confocal microscope of the present invention is shown in Fig. 16. The difference of a confocal microscope 9B using liquid crystal shown in the figure from that of 9 shown in Fig.14 is an inlet optical part 20'. Since other illuminating optical part 60, the light detecting part 30', the control part 100, and the stage 3 are same makeup as in Fig. 14, their explanation is omitted. The inlet optical part 20' of this example differs from that of Fig. 14 in that a second polarizer 25 is provided to the lower part of the matrix type liquid crystal device 22. The function of said second polarizer 25 is to change illuminating light intensity by drive-voltage of a pixel 22a of the first matrix type liquid crystal device, as explained in Figs. 4 and 5. In each pixel 22a of the first matrix type liquid crystal device 22 of the inlet optical part, each pixel of the first matrix type liquid crystal device 22 can be controlled so that the polarization directions transmitted through each neighboring pixel 22a are made mutually orthogonal.

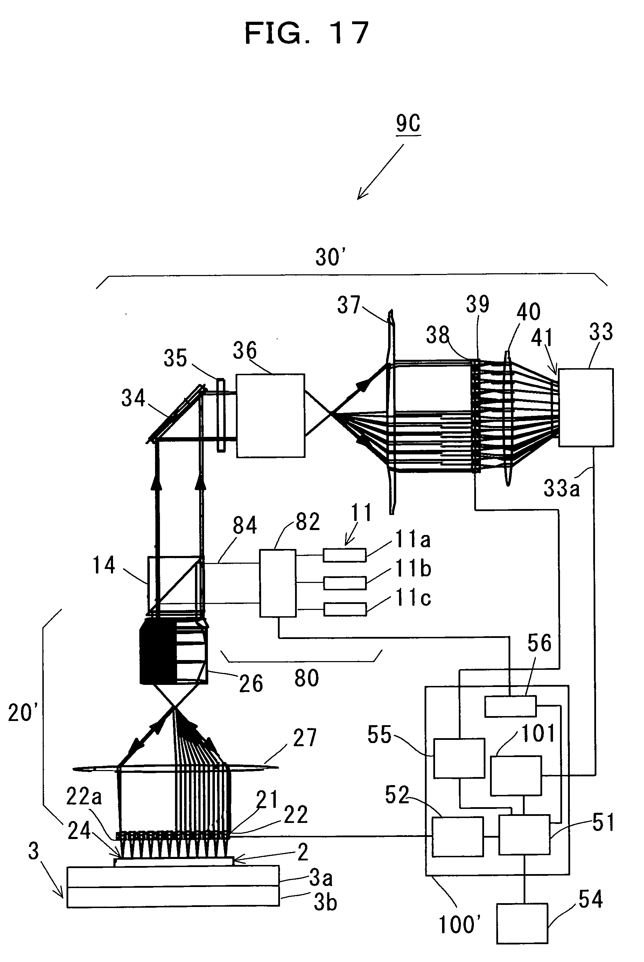

Next, the sixth embodiment of a confocal microscope of the present invention is shown in Fig. 17. The difference of a confocal microscope 9C from that of 9 shown in Fig. 14 is an illuminating optical part 80 and a control part 100'. Here, the explanation is omitted by marking with same reference numerals to the same makeup components of Fig. 14. Since the illuminating optical part 80 can be made up identically as in Figs. 11 and 12, the detail explanation is omitted. Since also the control optical part 100' can be made up identically as in Fig. 14 except that it is comprising an amplitude modulation control part 56 and an image processing apparatus 101 to detect the amplitude modulated reflected light, the detail explanation is omitted.

Here, the illuminating light source 11 has the lights 11a, 11b, and 11c of three different wavelengths, and each light of respective wavelength is amplitude modulated. For the light transmitted through each pixel of matrix type liquid crystal devices 22 and 39, each pixel of matrix type liquid crystal devices 22 and 39 is controlled so that the polarization directions are made mutually orthogonal, and, since the reflected or fluorescent lights of different wavelengths are amplitude modulated in each pixel, the cross-talk is not occurred. Also, since the incident light of different wavelength has different amplitude modulation frequency in each pixel, the reflected or fluorescent light from respective wavelength can be easily distinguished.

Further, since the noise or others except for the cross-talk generated inside the confocal microscope 9 are different from the amplitude modulation frequency and can be easily distinguished on the frequency axis, the signal-to-noise ratio (S/N ratio) can be improved. That is, the reflected or fluorescent light from the object to be observed 2 can be detected with high sensitivity. Thereby, the reflected or fluorescent light having multi wavelengths of said object 2 can be observed at high speed and high sensitivity without mechanical scanning of said object 2 and switching of detectors depending upon wavelengths. Also, the cross-talk can be prevented between multi-confoci, and the resolution is improved.

Next, a modified example of the sixth embodiment of a confocal microscope is explained, referring to Fig. 18. The difference of a confocal microscope 9D using liquid crystal shown in the figure from that of 9C shown in Fig. 17 is an inlet optical part 20'. Since other illuminating optical part 80, the light detecting part 30', the control part 100', and the stage 3 are same makeup as in Fig. 17, their explanation is omitted. The inlet optical part 20' of this example differs from that of Fig. 17 in that a second polarizer 25 is provided to the lower part of a matrix type liquid crystal device 22. The function of said second polarizer 25 is to change illuminating light intensity by drive-voltage of a pixel 22a of the first matrix type liquid crystal device as explained in Figs. 4 and 5. In each pixel 22a of the first matrix type liquid crystal device 22 of the inlet optical part, each pixel of the first matrix type liquid crystal device 22 is controlled so that the polarization directions of the light transmitted through each neighboring pixel 22a are made mutually orthogonal.

Here, the cross-talks between plural foci 41 formed on the imaging device 33 by the reflected light from the object to be observed 2 can be prevented by polarization control of each pixel of the second matrix type liquid crystal device. Therefore, when the incident light illumination is controlled, since the image without cross-talks of the reflected light can be formed, it is not necessary to synthesize a whole image by mechanical scanning like a conventional confocal microscope, and immediate observation is possible on the display 54 of the control part 100'. Thereby, the reflected or fluorescent light having multi wavelengths of said object 2 can be measured with a high speed without using mechanical scanning of said object 2. Also, cross-talks can be prevented between multi confoci, and the resolution is improved, as well as the sensitivity is improved by the amplitude modulated light source. Further by combination of two matrix type liquid crystal devices and the second polarizer 25, the illuminating light control, the polarized light control, selection of detected signals, and others can be realized.

The embodiment of the method of measurement of a microarray substrate using a confocal microscope is explained below. Here, the microarray substrate is an object to be observed of a minute amount of the planarly located DNA, or a biological material. A fluorescent material is given in advance as a selective marker in said microarray substrate. Said microarray substrate may also be a DNA microarray substrate which is hybridization-reacted with a fluorescent-marked single chain DNA.

The measurement method to observe said DNA microarray substrate using a confocal microscope 5 of the present invention shown in Fig. 6 is explained. The size of the first and second matrix type liquid crystal devices 22 and 39 in the confocal microscope 5 should be sufficiently larger than that of the DNA microarray substrate. Therefore, the whole reflected image or fluorescent light from the DNA microarray substrate can be observed using the confocal microscope 5.

First, the DNA microarray substrate is located on the stage 3, and the illuminating light source 11 is switched on. Next the Z-direction position of the DNA microarray substrate to be observed is adjusted using the XYZ stage 3a and the θ stage 3b so that the focus position of the illuminating light source 11 and the detection position of the DNA microarray substrate are overlapped.

The incident light to the DNA microarray substrate is controlled by the first liquid crystal control subpart 52 so that the polarization directions of the incident light transmitted through each neighboring pixel 22a are made mutually orthogonal by the matrix type liquid crystal device 22. In this case, each pixel of the second matrix type liquid crystal device 39 in the light detecting part is also controlled by the second liquid crystal control subpart. Thus, all the fluorescence generated from the DNA microarray substrate can be simultaneously detected by using, for example, a CCD camera as the imaging device 33, and the fluorescent image can be observed by changing the intensity of detected signals or polarization direction.

Here, the size of pixels of matrix type liquid crystal devices 22 and 39 is 10 - 20 µm, and since the diameter of single fluorescence generated from a DNA microarray substrate is, for example, about 100 µm, the resolution is sufficient. Therefore, the number of fluorescences or their positions of generation on the DNA microarray substrate can be immediately judged. And the image recording or data processing can be conducted rapidly by using the personal computer 51 of the control part 50. Also, by observing said DNA microarray substrate by using the confocal microscope of the present invention shown in Fig. 14, the light source is amplitude modulated, and the fluorescence from said DNA microarray substrate can be measured with a high sensitivity on the frequency axis.

Next, the measurement method to observe a DNA microarray substrate by using the confocal microscope 5 of the present invention shown in Fig. 11 is explained when a fluorescent material is given in advance which possesses a plurality of fluorescent wavelengths as selective markers. If the observation is made by using the confocal microscope 9B of the present invention as shown in Fig. 16, then the light source has multi wavelengths, and each wavelength is amplitude modulated, so that the fluorescence of multi wavelengths from a DNA microarray substrate can be measured with a high sensitivity on the frequency axis.

According to the measurement method of the microarray substrate using the confocal microscope mentioned above, the multi foci corresponding to the number of pixels of thetrix type liquid crystal device are formed on the micorarray substrate, the reflected light from them are let into a confocal light detecting part via the operation optical part, and are formed as the multi foci corresponding to the number of pixels via a matrix type liquid crystal device. Consequently, by the confocal microscope of the present invention, the objects to be observed corresponding to the number of pixels of a matrix type liquid crystal device can be observed simultaneously. Also, since the light source of not only a single wavelength but also multi wavelengths can be used, the fluorescence of multi wavelengths from a DNA microarray substrate can be measured in a short time with high accuracy. Thereby, a sharp whole image of the ecxited fluorescence from the DNA microarray substrate can be observed without mechanical scanning of a DNA microarray substrate, that is, at ream time.

An embodiment of the measurement method of the polarized light using a confocal microscope is explained next. The polarized light is that from the reflected or fluorescent light of the object to be observed 2, and for example, a case is explained as an example where the polarized light from the fluorescent light by said DNA microarray substrate, using a confocal microscope 9C of the present invention shown in Fig. 17.

First of all, a DNA microarray substrate is set on a stage 3, and an illuminating light source 11 is switched on. Next the Z-directional position of the DNA microarray substrate to be observed is adjusted by using an XYZ stage 3a and a θ stage 3b so that the focus position of the illuminating light source 11 and the detection position of the DNA microarray substrate are overlapped. The incident light into the DNA microarray substrate is controlled by the first liquid crystal control subpart 52 so that the polarization directions of the incident lights transmitted through neighboring pixels are made to differ from one another by the matrix type liquid crystal device 22. In this case, the polarization direction of the light transmitted through each pixel can be controlled independently for each pixel. By rotating said polarized light to 180 degrees, the amount of light transmitted through a polarizer 25 is changed, and the change of the polarized light from the object to be observed can be observed.

Thus, the polarized light from fluorescent or reflected light of the DNA microarray substrate, biological samples, sugar-protein bonding, or the like can be detected by using, for example, a CCD camera as an imaging device 33. When the observation is made by use of the confocal microscope 9B of the present invention, then the light source has multi wavelengths, and each wavelength is amplitude modulated, so that the polarized light of fluorescence of multi wavelengths from a DNA microarray substrate can be measured with high sensitivity on the frequency axis.

Here, since the sizes of pixels of the matrix type liquid crystal devices 22 and 39 are 10 - 20 µm, and, for example, the size of single fluorescence generated on a DNA microarray substrate is about 100 µm in diameter, the resolution is sufficient. Therefore, the polarized light of fluorescence of the DNA microarray substrate can be measured immediately. In this case, recording of images and data processing can be performed with high speed by using the personal computer 51 in the control part 50.

According to the measurement method of the polarized light of the reflected or fluorescent light using a confocal microscope of the present invention, the multi foci corresponding to the number of pixels of a matrix type liquid crystal device are formed on the micorarray substrate, the reflected light from them are let into a confocal light detecting part via a separation optical part, and are formed as the multi foci corresponding to the number of pixels via a matrix type liquid crystal device. Consequently, by the confocal microscope of the present invention, the polarized lights from the objects to be observed corresponding to the number of pixels of a matrix type liquid crystal device can be observed simultaneously. Also, since the light source of not only a single wavelength but also multi wavelengths can be used, the polarized light from the reflected or the fluorescent light of multi-wavelength from the object to be observed can be measured in a short time with high accuracy.

It is needless to mention that the present invention is not limited to the embodiments described above, but can be modified variously within the limitation of the invention as set forth in the claims, and said modifications are also included in the claims. An imaging device is used as a light detecting part in the embodiments mentioned above, but it is also possible to use a plurality of detective parts if necessary, so that the visual observation or the photography are possible at the position of an imaging device. Also it is needless to mention that, for the compositions of the inlet and the light detecting part of multi wavelengths and the amplitude modulation devices, optimal designs and the parts to use for them may be selected depending upon the object to be observed.

## Claims

1. A confocal microscope using liquid crystal, comprising:
an inlet optical part to let a polarized light from an illuminating light source onto an object to be observed via a beam splitter, a matrix type liquid crystal device provided with a microlens array on its top part, and an objective lens;
a light detecting part including an imaging device to detect a reflected or a fluorescent light from the object to be observed via said beam splitter and lens; and
a control part including a liquid crystal control subpart to control each pixel of said matrix type liquid crystal device,
**characterized in that** it transmits the light passing through said microlens array from each microlens to each pixel of said matrix type liquid crystal device, and makes a plurality of foci on said object to be observed by said objective lens, as well as controls the polarization direction of the light transmitted through each pixel of said matrix type liquid crystal device using said liquid crystal control subpart, and
said liquid crystal control subpart controls polarization directions of the lights transmitted through each pixel of the matrix type liquid crystal device so that they are made mutually orthogonal.

2. The confocal microscope using liquid crystal as set forth in claim 1, **characterized in that** a polarizer is located in the lower part of said matrix type liquid crystal device and a polarized light transmitted through said polarizer is controlled by each pixel of said matrix type liquid crystal.

3. A confocal microscope using liquid crystal, comprising:
a inlet optical part to let a polarized light from an illuminating light source onto an object to be observed via a beam splitter, a lens, and the first matrix type liquid crystal device provided with a first microlens array on its top part,
a light detecting part including an imaging device to detect a reflected or a fluorescent light from an object to be observed via a beam splitter, a lens, and a second matrix type liquid crystal device provided with a second microlens array on its top part; and
a control part including a first and a second liquid crystal control subpart to control a polarization direction of a light transmitted through each pixel of said first and second matrix type liquid crystal device,
**characterized in that** it transmits the light passing through said first microlens array from each microlens to each pixel of said first matrix type liquid crystal device, and makes a plurality of foci on said object to be observed,
and further, it transmits said reflected or fluorescent light passing through said second microlens array from each microlens array to each pixel of said second matrix type liquid crystal device, and makes a plurality of foci on said imaging device, as well as controls the polarization direction of the light transmitted through each pixel of said first and second matrix type liquid crystal devices using said first and second liquid crystal control subpart.

4. The confocal microscope using liquid crystal as set forth in claim 3, **characterized in that** said first liquid crystal control subpart of said inlet optical part controls polarization directions of the lights transmitted through each pixel of the first matrix type liquid crystal device so that they are made mutually orthogonal.

5. The confocal microscope using liquid crystal as set forth in claim 3, **characterized in that** said second liquid crystal control subpart of said light detecting part controls polarization directions of the lights transmitted through each pixel of the second matrix type liquid crystal device so that they are made mutually orthogonal.

6. The confocal microscope using liquid crystal as set forth in claim 3, **characterized in that**, a polarizer is located in the lower part of said first matrix type liquid crystal device, and a polarization direction of the light transmitted through said polarizer is controlled by each pixel of said first matrix type liquid crystal.

7. A confocal microscope using liquid crystal, comprising:
an inlet optical part to let an amplitude modulated polarized light from an illuminating light source onto an object to be observed via a beam splitter, a matrix type liquid crystal device provided with a microlens array on its top part, and an objective lens;
a light detecting part including an imaging device to detect a reflected or a fluorescent light from the object to be observed via said beam splitter and a lens; and
a control part including a liquid crystal control subpart to control each pixel of said matrix type liquid crystal device, and an amplitude modulation control part of said illuminating light source,
**characterized in that** it transmits the light passing through said microlens array from each microlens to each pixel of said matrix type liquid crystal device, and makes a plurality of foci said object to be observed by said objective lens, as well as it controls the polarization directions of the lights transmitted through each pixel of said matrix type liquid crystal device so that they are made mutually orthogonal by using said liquid crystal control subpart, and detects amplitude modulation signals of the reflected or fluorescent light from said object to be observed by transforming them to frequency component signals.

8. The confocal microscope using liquid crystal as set forth in claim 7, **characterized in that** a polarizer is located in the lower part of said matrix type liquid crystal device, and an polarized light transmitted through said polarizer is controlled by each pixel of said matrix type liquid crystal.

9. The confocal microscope using liquid crystal as set forth in claim 7, **characterized in that** said illuminating light source is of either single wavelength or multi wavelengths, and said illuminating light source is amplitude modulated by using either a matrix type liquid crystal device, an acoustooptic modulator, or a digital mirror device.

10. The confocal microscope using liquid crystal as set forth in claim 7 or 9, **characterized in that**, the amplitude modulation for each wavelength of said illuminating light source is applied to each pixel by a plurality of modulation frequency.

11. The confocal microscope using liquid crystal as set forth in claim 7, **characterized in that**, the conversion of amplitude modulation signals of the reflected or fluorescent light from said object to be observed to frequency signals is operation-processed by high speed Fourier transform.

12. A confocal microscope using liquid crystal, comprising:
a inlet optical part to let an amplitude modulated polarized light from an illuminating light source onto an object to be observed via a beam splitter, a lens, and a first matrix type liquid crystal device provided with a first microlens array on its top part,
a light detecting part including an imaging device to detect a reflected or a fluorescent light from the object to be observed via a beam splitter, a lens, a second matrix type liquid crystal device provided with a second microlens array on its top part, and a condenser lens; and
a control part including a first and a second liquid crystal control subpart to control a polarization direction of a light transmitted through each pixel of said first and second matrix type liquid crystal device,
**characterized in that** it transmits the light passing through said first microlens array from each microlens to each pixel of said first matrix type liquid crystal device, and makes a plurality of foci on said object to be observed,
and further, it transmits said reflected or fluorescent light passing through said second microlens array from each microlens array to each pixel of said second matrix type liquid crystal device, and makes a plurality of foci on said imaging device, as well as controls the polarization direction of the light transmitted through each pixel of said first and second matrix type liquid crystal devices using said first and second liquid crystal control subpart, and detects amplitude modulation signals of the reflected or fluorescent light from said object to be observed by converting them to frequency signals.

13. The confocal microscope using liquid crystal as set forth in claim 12, **characterized in that**, said first liquid crystal control subpart of said inlet optical part controls polarization directions of the lights transmitted through each pixel of said first matrix type liquid crystal device so that they are made mutually orthogonal.

14. The confocal microscope using liquid crystal as set forth in claim 12, **characterized in that**, said second liquid crystal control subpart of said light detecting part controls polarization directions of the lights transmitted through each pixel of said second matrix type liquid crystal device so that they are made mutually orthogonal.

15. The confocal microscope using liquid crystal as set forth in claim 12, **characterized in that**, a polarizer is located in the lower part of said first matrix type liquid crystal device, and the polarized light transmitted through said polarizer is controlled by each pixel of said matrix type liquid crystal.

16. The confocal microscope using liquid crystal as set forth in claim 12, **characterized in that**, said illuminating light source is of either single wavelength or multi wavelengths, and said illuminating light source is amplitude modulated by using either a matrix type liquid crystal device, an acoustooptic modulator, or a digital mirror device.

17. The confocal microscope using liquid crystal as set forth in claim 12 or 16, **characterized in that**, the amplitude modulation for one wavelength of said illuminating light source is applied to each pixel by a plurality of modulation frequency.

18. The confocal microscope using liquid crystal as set forth in claim 12, **characterized in that** the transform from the amplitude modulation signal of the reflected or fluorescent light of said object to be observed to frequency signal is processed by Fast Fourier Transform.

19. The method of measuring fluorescence from a microarray substrate by a confocal microscope using liquid crystal, **characterized in that** for the fluorescence measurement of a microarray substrate with a fluorescent material as a selective marker given in advance, the fluorescence from said fluorescent material is observed by using a confocal microscope using liquid crystal as set forth in any one of claims 1 to 18.

20. The method of measuring fluorescence from a microarray substrate by a confocal microscope using liquid crystal as set forth in claim 19, **characterized in that** said microarray substrate contains a minute amount of DNA or a biological material.

21. The method of measuring fluorescence from a microarray substrate by a confocal microscope using liquid crystal as set forth in claim 19 or 20, **characterized in that**, said microarray substrate is a DNA chip.

22. The method of measuring polarized light by said confocal microscope, **characterized in that** for measuring polarized light from the reflected or fluorescent light from an object to be observed, the polarized light from said object to be observed is measured by using a confocal microscope using liquid crystal as set forth in any one of claims 1 to 18.

23. The method of measuring polarized light by the confocal microscope using liquid crystal as set forth in claim 22, **characterized in that** in the liquid crystal matrix of said confocal microscope using liquid crystal, the polarized light from said object to be observed is measured by rotating said polarized light by 180 degrees.
